# EUROPEAN PATENT APPLICATION

(11) **EP 4 797 185 A1**
(43) Date of publication of application: **26.08.2026**
(21) Application number: 25822877.4
(22) Date of filing: 25.11.2025
(51) Int. Cl.: G06Q 30/02, G06N 5/01, H04N 21/44, H04N 21/466

(54) **ELECTRONIC DEVICE AND OPERATING METHOD THEREOF**

(30) Priority: 13.01.2025 KR 20250004984
(71) Applicant: Samsung Electronics Co., Ltd., Suwon-si, Gyeonggi-do 16677 (KR)
(72) Inventor: PARK, Jinsol, Suwon-si, Gyeonggi-do 16677 (KR); JANG, Jeongrok, Suwon-si, Gyeonggi-do 16677 (KR); CHO, Suho, Suwon-si, Gyeonggi-do 16677 (KR); SEO, Minkyo, Suwon-si, Gyeonggi-do 16677 (KR)
(74) Representative: Gulde & Partner
(86) International application number: PCT/KR2025/019627
(87) International publication number: WO 2026/151062

(57) **Abstract**

An operation method of an electronic device may include receiving a user input corresponding to playback of content, obtaining, based on a knowledge graph for the content and a knowledge graph for at least one advertisement, an advertisement to be output during the playback of the content and an output time for the advertisement, and outputting the advertisement at the output time for the advertisement.

## Description

### Technical Field

The disclosure relates to an electronic device and an operation method thereof. More specifically, the disclosure relates to an electronic device for playing advertisements during content playback and an operation method of the electronic device.

### Background Art

As the frequency of digital content viewing has increased, attempts to output advertisements during content viewing have also increased.

As a result, users are exposed to numerous advertisements while viewing digital content. Randomly displayed advertisements may cause fatigue for users and reduce the effectiveness of advertising.

Therefore, there is a need for research on displaying advertisements that match content at an appropriate time in order to maximize advertising effectiveness.

### Disclosure

### Technical Solution

According to an embodiment of the disclosure, an electronic device may include at least one processor including processing circuitry.

According to an embodiment of the disclosure, the electronic device may include memory storing one or more instructions.

The one or more instructions, when executed by the at least one processor individually or collectively, may cause the electronic device to receive a user input corresponding to playback of content.

The one or more instructions, when executed by the at least one processor individually or collectively, may cause the electronic device to obtain, based on a knowledge graph for the content and a knowledge graph for at least one advertisement, an advertisement to be output during the playback of the content and an output time for the advertisement.

The one or more instructions, when executed by the at least one processor individually or collectively, may cause the electronic device to output the advertisement at the output time for the advertisement.

According to an embodiment of the disclosure, an operation method of an electronic device may include receiving a user input corresponding to playback of content.

According to an embodiment of the disclosure, the operation method of the electronic device may include obtaining, based on a knowledge graph for the content and a knowledge graph for at least one advertisement, an advertisement to be output during the playback of the content and an output time for the advertisement.

According to an embodiment of the disclosure, the operation method of the electronic device may include outputting the advertisement at the output time for the advertisement.

According to an embodiment of the disclosure, a computer-readable recording medium may have recorded thereon a program for performing an operation method of an electronic device, including receiving a user input corresponding to playback of content.

According to an embodiment of the disclosure, the operation method of the electronic device, implemented by the program recorded on the computer-readable recording medium, may include obtaining, based on a knowledge graph for the content and a knowledge graph for at least one advertisement, an advertisement to be output during the playback of the content and an output time for the advertisement.

According to an embodiment of the disclosure, the operation method of the electronic device, implemented by the program recorded on the computer-readable recording medium, may include outputting the advertisement at the output time for the advertisement.

### Description of Drawings

FIG. 1 is a diagram illustrating an example of operation of an electronic device, according to an embodiment of the disclosure.
FIG. 2 is a diagram illustrating a method of obtaining a content knowledge graph, according to an embodiment of the disclosure.
FIG. 3 is a diagram illustrating an example of content metadata used to obtain a content knowledge graph, according to an embodiment of the disclosure.
FIG. 4 is a diagram illustrating an example of a content knowledge graph obtained according to an embodiment of the disclosure.
FIG. 5 is a diagram illustrating a method of obtaining an advertisement knowledge graph, according to an embodiment of the disclosure.
FIG. 6 is a diagram illustrating an example of advertisement metadata used to obtain an advertisement knowledge graph, according to an embodiment of the disclosure.
FIG. 7 is a diagram illustrating an example of an advertisement knowledge graph obtained according to an embodiment of the disclosure.
FIG. 8 is a flowchart of an operation method of an electronic device, according to an embodiment of the disclosure.
FIG. 9 is a diagram illustrating an example of a method, performed by an electronic device, of obtaining an advertisement to be output during content playback and an output time for the advertisement by using artificial intelligence (AI), according to an embodiment of the disclosure.
FIG. 10 is a diagram illustrating an example of a method, performed by an electronic device, of obtaining an advertisement to be output during content playback and an output time for the advertisement by using artificial intelligence (AI), according to an embodiment of the disclosure.
FIG. 11 is a flowchart of an operation method of an electronic device, according to an embodiment of the disclosure.
FIG. 12 is a diagram illustrating an example of advertisement categories that may be used in an operation method of an electronic device, according to an embodiment of the disclosure.
FIG. 13A is a diagram illustrating examples of input information for obtaining an advertisement and an advertisement output time according to an operation method of an electronic device, according to an embodiment of the disclosure.
FIG. 13B is a diagram illustrating an example of a process of obtaining an advertisement and an advertisement output time according to an operation method of an electronic device, according to an embodiment of the disclosure.
FIG. 14 is a diagram illustrating an example of an operation method of an electronic device using a server, according to an embodiment of the disclosure.
FIG. 15 is a diagram illustrating an example of an operation method of an electronic device using a server, according to an embodiment of the disclosure.
FIG. 16 is a diagram illustrating an example of an operation method of an electronic device operating on-device, according to an embodiment of the disclosure.
FIG. 17 is a block diagram of an electronic device according to an embodiment of the disclosure.
FIG. 18 is a detailed block diagram of an electronic device according to an embodiment of the disclosure.

### Mode for Invention

An embodiment of the disclosure will be described more fully hereinafter with reference to the accompanying drawings so that the embodiment may be easily implemented by one of ordinary skill in the art. However, the disclosure may be implemented in different forms and should not be construed as being limited to an embodiment of the disclosure set forth herein.

The terms used in the disclosure are general terms currently widely used in the art by taking into account functions described herein, but may mean various other terms depending on an intention of skilled persons in the related art, precedent cases, advent of new technologies, etc. Thus, the terms used herein should be defined not by simple appellations thereof but based on the meaning of the terms together with the overall description of the disclosure.

In addition, the terms used herein are only used to describe a particular embodiment of the disclosure, and are not intended to limit the disclosure.

Furthermore, it should be understood that when a component is referred to herein as being "connected" or "coupled" to another component, the component may be directly connected or coupled to the other component, but may also be connected or coupled to the other component via another intervening component therebetween unless there is a particular description contrary thereto.

The use of the terms "the" and similar referents used in the specification, especially in the following claims, are to be construed to cover both the singular and the plural. Furthermore, operations of a method according to the disclosure described herein may be performed in any suitable order unless the order of the operations is clearly specified herein. The disclosure is not limited to the described order of the operations.

Expressions such as "in some embodiments of the disclosure" or "in an embodiment of the disclosure" described in various parts of this specification do not necessarily refer to the same embodiment(s).

The terms such as "mechanism", "element", "means", and "construction" may be used in a broad sense and are not limited to mechanical or physical components.

An embodiment of the disclosure may be described in terms of functional block components and various processing operations.

Furthermore, connecting lines or connectors shown in various figures are intended to represent exemplary functional relationships and/or physical or logical couplings between components in the figures. In an actual device, connections between components may be represented by various alternative or additional functional relationships, physical connections, or logical connections.

In addition, terms such as "portion", "module", etc., described in the specification refer to a unit for processing at least one function or operation and may be implemented as hardware or software, or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, the term "user" in the specification may refer to a person who uses an electronic device to control the functions or operation of the electronic device.

In the specification, the expression "at least one of A or B" or "at least one of A, or B" indicates one of only A, only B, and both A or B. Similarly, the expression "at least one of A, B or C" or "at least one of A, B or C" indicates one of only A, only B, only C, both A and B, both A and C, both B and C, all of A, B, and C, or variations thereof.

Embodiments of the disclosure will be described more fully hereinafter with reference to the accompanying drawings so that they may be easily implemented by one of ordinary skill in the art. Furthermore, to clearly describe the disclosure as shown in the drawings, parts not related to the description are omitted.

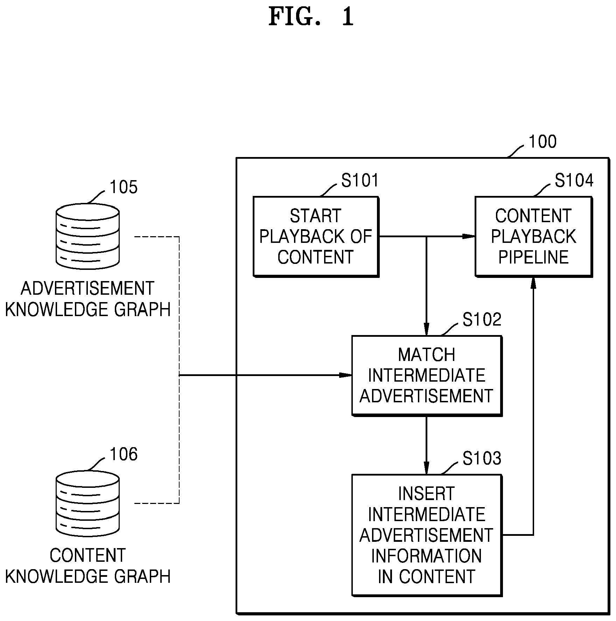

FIG. 1 is a diagram illustrating an example of operation of an electronic device, according to an embodiment of the disclosure.

According to the disclosure, the electronic device 100 may receive a content playback request from a user and start playback of content (S101).

According to the disclosure, the electronic device 100 may be a smart TV, but this is only an embodiment of the disclosure and the electronic device 100 may be implemented in various forms.

The electronic device 100 may be easily implemented as a device including a video output portion, such as a smart TV, but is not limited thereto. In addition, the electronic device 100 may be implemented in a stationary or portable form, and may be a digital broadcast receiver capable of receiving digital broadcasts.

In an embodiment of the disclosure, the electronic device 100 may be implemented as a device that performs image output as one of its functions while performing other functions.

According to an embodiment of the disclosure, the electronic device 100 may be implemented in various forms, such as a tablet personal computer (PC), a smartphone, a digital camera, a camcorder, a laptop computer, a smart television (TV), a netbook computer, a desktop computer, an e-book terminal, a video phone, a digital broadcasting terminal, a personal multimedia assistant (PDA), a portable multimedia player (PMP), a navigation device, a wearable device, a smart refrigerator, and other home appliances.

The electronic device 100 may have a built-in display, but is not limited thereto, and may be implemented in a form that allows operation by being connected to an external display even without a built-in display.

For example, the electronic device 100 may be implemented in a form that outputs images to a separate external display through a video or audio output port, such as a set-top box (STB) that is without a display or includes a simple display for notifications and the like.

In this case, the electronic device 100 may include an output port for outputting video or audio signals to a display. The output port may have a form that allows simultaneous transmission of video signals and audio signals, such as High-Definition Multimedia Interface (HDMI), DisplayPort (DP), or Thunderbolt, or may have separate ports for separately transmitting video signals and audio signals.

In an embodiment of the disclosure, the electronic device 100 may transmit video or audio signals via wired or wireless communication or the like.

The electronic device 100 may be implemented as an electronic device with a flat display, a curved electronic device with a display having a curvature, or a flexible electronic device with an adjustable curvature. An output resolution of the electronic device 100 may include, for example, HD, Full HD, Ultra HD, or resolutions higher than the Ultra HD.

In an embodiment of the disclosure, at the time when the playback of the content starts after receiving the content playback request from the user, the electronic device 100 may match an intermediate (or mid-roll) advertisement to be output during the playback of the content (S102).

In the disclosure, intermediate advertisement matching may refer to the task of obtaining an advertisement to be output during content playback and a time when the advertisement is to be output (hereinafter, an output time for the advertisement).

In an embodiment of the disclosure, the electronic device 100 may use an advertisement knowledge graph 105 and a content knowledge graph 106 to match the intermediate advertisement.

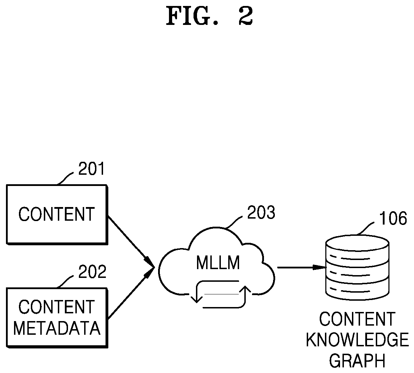

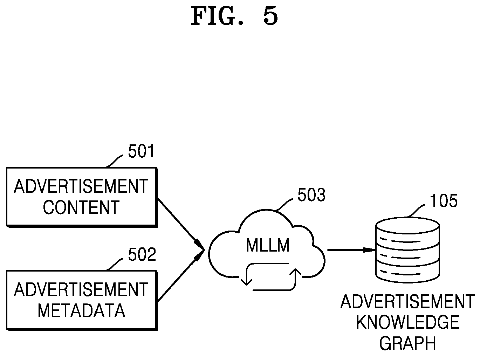

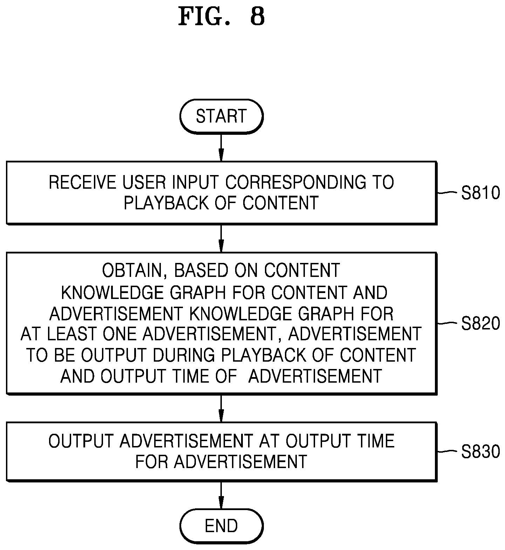

In the disclosure, the content knowledge graph 106 is described in detail with reference to FIGS. 2 to 4, the advertisement knowledge graph 105 are described in detail with reference to FIGS. 5 to 7, and a method of matching an intermediate advertisement by using the advertisement knowledge graph 105 and the content knowledge graph 106 is described in detail with reference to FIGS. 8 to 14.

FIG. 2 is a diagram illustrating a method of obtaining a content knowledge graph, according to an embodiment of the disclosure.

In an embodiment of the disclosure, the electronic device 100 may obtain a content knowledge graph 106 by using content 201 and content metadata 202.

In an embodiment of the disclosure, the electronic device 100 may obtain the content knowledge graph 106 by using a Video on Demand (VOD) content and VOD content metadata.

In an embodiment of the disclosure, the electronic device 100 may improve the performance of analysis results for the content 201 by generating the content knowledge graph 106 by considering not only the content 201 but also the content metadata 202.

In an embodiment of the disclosure, the electronic device 100 may obtain the content knowledge graph 106 by inputting the content 201 and the content metadata 202 to a multimodal large language model (multimodal LLM) 203.

In an embodiment of the disclosure, the electronic device 100 may obtain the content knowledge graph 106 by inputting a VOD content and metadata about the VOD content to the multimodal LLM 203.

A multimodal LLM may be an upgraded version of an LLM.

An LLM may be an artificial intelligence (AI) model that is specialized for performing natural language processing (NLP) tasks and trained based on vast amounts of text data.

A multimodal LLM refers to a large language model capable of processing various types of data, such as images, audio, and video, in addition to text. While LLMs are primarily trained based on text and generate responses only to text inputs, multimodal LLMs may have the ability to understand and process data from multiple modalities simultaneously. While the multimodal LLM 203 is a preferred AI model for this task due to its ability to process video and text, it is to be understood that the knowledge graphs may be generated by other types of artificial intelligence models. For example, the AI model may be a deep neural network (DNN) model, a convolutional neural network (CNN) model, or a recurrent neural network (RNN) model, adapted for processing the content and metadata. In an embodiment of the disclosure, the content 201 or VOD content may refer to content displayed via the electronic device 100 in response to a user's request.

Examples of the content 201 may include movies, dramas, documentaries, news, and sports broadcasts.

In an embodiment of the disclosure, the content metadata 202 may refer to metadata about the content 201 displayed via the electronic device 100 in response to the user's request.

Examples of the content metadata 202 may include title, genre, plot, cast, characters, historical background, location, and information about product placement (PPL) advertisement included in the content 201.

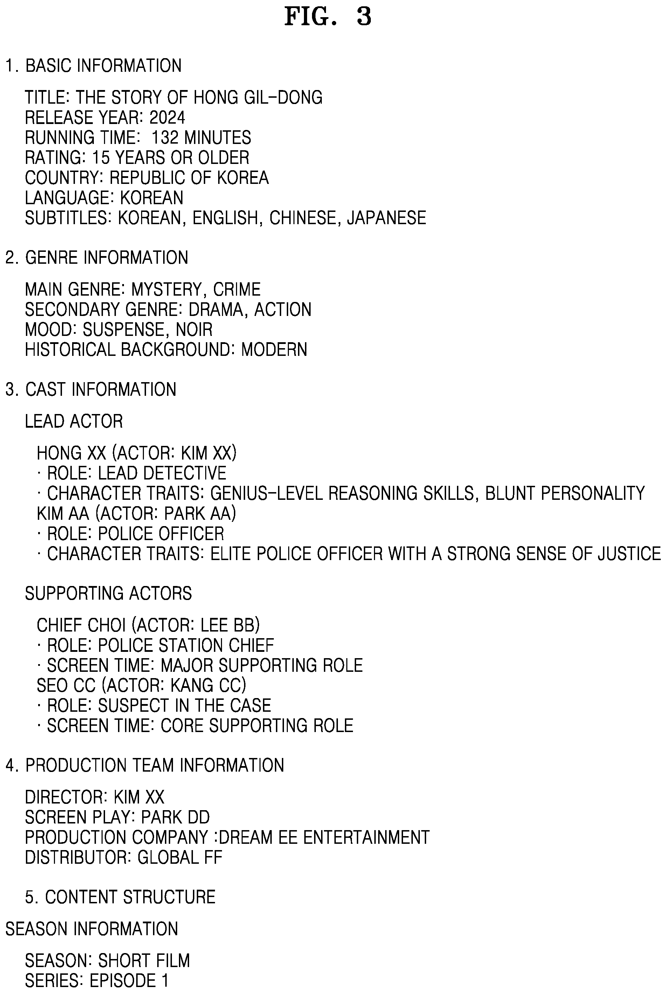

FIG. 3 is a diagram illustrating an example of content metadata used to obtain a content knowledge graph, according to an embodiment of the disclosure.

In the embodiment of the disclosure illustrated in FIG. 3, the content metadata 202 may include information indicating that the title of content is The Story of Hong Gil-dong, a content type is a movie, a movie release year is 2024, a total running time is 132 minutes, and a viewing rating is 15 years of age or older.

In the embodiment of the disclosure illustrated in FIG. 3, the content metadata 202 may include information indicating that a country where the content was created is the Republic of Korea, a language used in the content is Korean, and subtitles in Korean, English, Chinese, and Japanese are provided for the content.

In the embodiment of the disclosure illustrated in FIG. 3, the content metadata 202 may include information indicating that a main genre of the content is mystery and crime, a secondary genre is drama and action, a mood of the content is suspense and noir, and a historical background of the content is modern.

In the embodiment of the disclosure illustrated in FIG. 3, the content metadata 202 may include information indicating that the actor Kim XX plays the role of the main character, Hong XX, among the characters in the content, and Hong XX is a detective with genius-level reasoning skills but a blunt personality.

In the embodiment of the disclosure illustrated in FIG. 3, the content metadata 202 may include information indicating that the actor Park AA plays the role of the main character, Kim AA, among the characters in the content, and that Kim AA is an elite police officer with a strong sense of justice.

In the embodiment of the disclosure illustrated in FIG. 3, the content metadata 202 may include information indicating that actor Lee BB plays the role of a major supporting character, Chief Choi, among the characters in the content, and that actor Kang CC plays the role of a core supporting character and Seo CC is a suspect in the case.

In the embodiment of the disclosure illustrated in FIG. 3, the content metadata 202 may include information about a production team of the content. The information about the production team may include information about a director, screenwriter, production company, and distributor.

In the embodiment of the disclosure illustrated in FIG. 3, the content metadata 202 may include information indicating that the content is a short film without season information and is not a series.

In an embodiment of the disclosure, the electronic device 100 may obtain the content knowledge graph 106 by inputting the content 201 and the metadata 202 about the content 201 (also hereinafter, the content metadata 202) to the multimodal LLM 203.

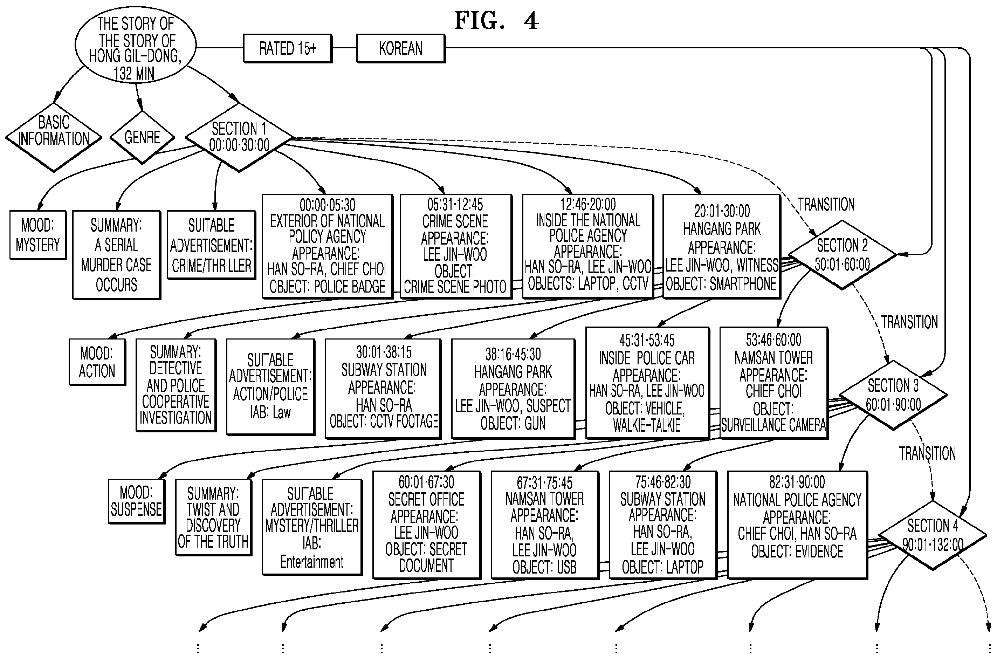

FIG. 4 is a diagram illustrating an example of a content knowledge graph obtained according to an embodiment of the disclosure.

A knowledge graph is structured information that may capture semantic connections of knowledge by representing information or data in a graph format. The knowledge graph may represent entities and relationships between the entities as a network of nodes and edges, and integrate and structure information extracted from various data sources, thereby providing the structured information in a machine-understandable form.

A content knowledge graph may be a graph obtained by structuring and storing information such as title, genre, overall summary, cast information, and section information (summaries, moods, section transition points, and advertisement categories suitable for sections).

FIG. 4 may be an example of the content knowledge graph 106 for the content 'The Story of Hong Gil-dong', obtained by inputting the content 201 'The Story of Hong Gil-dong' and the metadata 202 about 'The Story of Hong Gil-dong' to the multimodal LLM 203.

The multimodal LLM 203 may obtain section division information and detailed information about each section by analyzing 'The Story of Hong Gil-dong' and the metadata about 'The Story of Hong Gil-dong'.

In the disclosure, a section may refer to a unit of content obtained by dividing content. In an embodiment of the disclosure, content may be divided into sections by a change in location, a change in time setting, a change in characters, or a change in mood.

In the embodiment of the disclosure illustrated in FIG. 4, the multimodal LLM 203 may divide the content 201 'The Story of Hong Gil-dong' into at least four sections, derive, for each section, information such as playback interval information including section start time information and section end time information, mood, summary, and suitable advertisement category, and store the information in a knowledge graph.

In the embodiment of the disclosure illustrated in FIG. 4, the multimodal LLM 203 may obtain subsection information by further dividing each section into smaller units.

In an embodiment of the disclosure, subsection information may include playback interval information including subsection start time information and subsection end time information, characters, a location, and object information included in each subsection.

In the embodiment of the disclosure illustrated in FIG. 4, the multimodal LLM 203 divides the content into sections based on mood transitions and divides each section into subsections based on location transitions within the section, but a knowledge graph is not always generated in this format and may be created in various ways.

In an embodiment of the disclosure, the electronic device 100 may use the advertisement knowledge graph 105 and the content knowledge graph 106 to match an intermediate advertisement to be output during content playback.

Details of the advertisement knowledge graph 105 are described with reference to FIGS. 5 to 7.

FIG. 5 is a diagram illustrating a method of obtaining an advertisement knowledge graph, according to an embodiment of the disclosure.

In an embodiment of the disclosure, the electronic device 100 may obtain an advertisement knowledge graph 105 by using an advertisement 501 and advertisement metadata 502.

In an embodiment of the disclosure, the electronic device 100 may improve the performance of analysis results for the advertisement 501 by considering not only the advertisement 501 but also the advertisement metadata 502.

In an embodiment of the disclosure, the electronic device 100 may obtain the advertisement knowledge graph 105 by inputting the advertisement 501 and the advertisement metadata 502 to a multimodal LLM (or MLLM) 503.

The basic concept of the multimodal LLM 503 may be the same as that described with reference to FIG. 2, so a repeated description is omitted.

In an embodiment of the disclosure, the advertisement 501 may refer to a commercial video that may be inserted and output in the middle of content according to a request from an advertisement provider.

In an embodiment of the disclosure, the advertisement metadata 502 may refer to metadata that includes various types of information about the advertisement 501.

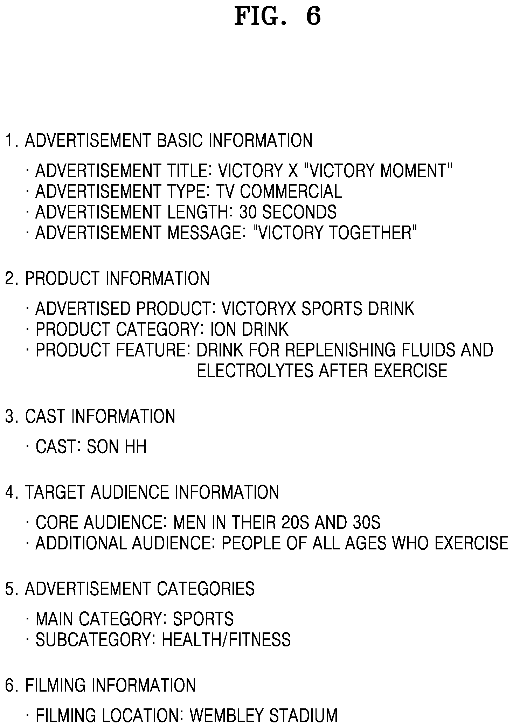

FIG. 6 is a diagram illustrating an example of advertisement metadata used to obtain an advertisement knowledge graph, according to an embodiment of the disclosure.

In an embodiment of the disclosure, metadata 502 about an advertisement (also hereinafter, advertisement metadata 502) may include an advertisement name, an advertisement type, an advertisement length, and advertisement message information.

In the embodiment of the disclosure illustrated in FIG. 6, the advertisement metadata 502 may include information indicating that the advertisement name is VictoryX "Victory Moment", the advertisement type is a TV commercial, the advertisement length is 30 seconds, and the advertisement message is "Victory Together".

In an embodiment of the disclosure, the advertisement metadata 502 may include a product being advertised, a classification of the product, a feature of the product.

In the embodiment of the disclosure illustrated in FIG. 6, the advertisement metadata 502 may include information indicating that the product being advertised is a VictoryX sports drink, that the product is classified as an ion drink, and that the product is characterized as a drink for replenishing fluids and electrolytes after exercise.

In an embodiment of the disclosure, the advertisement metadata 502 may include cast information of the advertisement.

In the embodiment of the disclosure illustrated in FIG. 6, the advertisement metadata 502 may include information indicating that a performer in the advertisement is Son HH.

In an embodiment of the disclosure, the advertisement metadata 502 may include core target audience information and additional audience information for the advertisement.

In the embodiment of the disclosure illustrated in FIG. 6, the advertisement metadata 502 may include information indicating that a core target audience for the advertisement is men in their 20s and 30s, and an additional audience is people of all ages who exercise.

In an embodiment of the disclosure, the advertisement metadata 502 may include information about a main classification and a subclassification of an advertisement category.

In the embodiment of the disclosure illustrated in FIG. 6, the advertisement metadata 502 may include information indicating that the main classification of the advertisement category is the sports field and the subclassification is the health and fitness field.

In an embodiment of the disclosure, the advertisement metadata 502 may include filming information of the advertisement 501, such as a filming location of the advertisement 501.

In the embodiment of the disclosure illustrated in FIG. 6, the advertisement metadata 502 may include information indicating that the filming location of the advertisement 501 is Wembley Stadium.

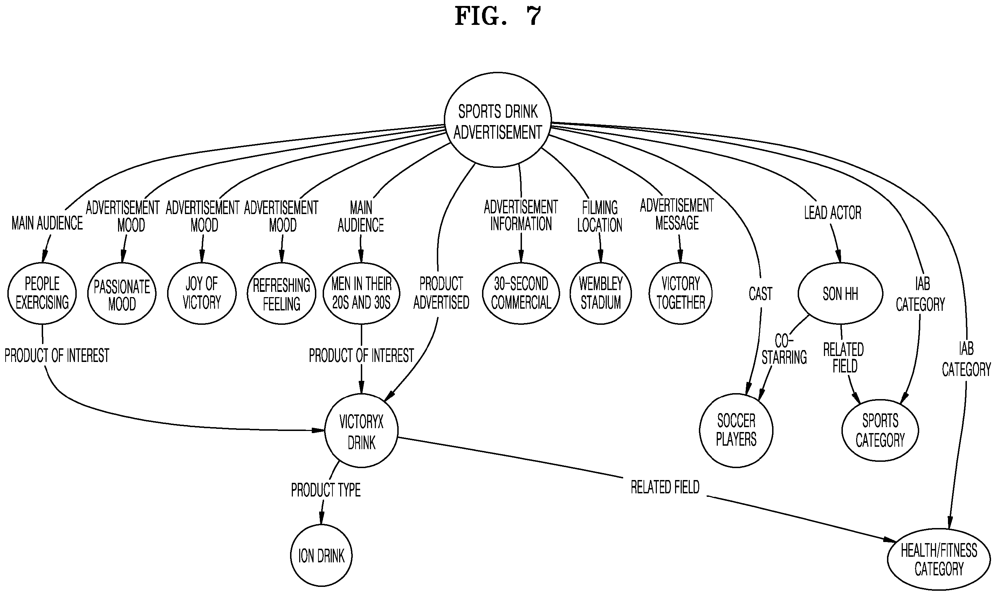

FIG. 7 is a diagram illustrating an example of an advertisement knowledge graph obtained according to an embodiment of the disclosure.

The basic concept of a knowledge graph is the same as that described with reference to FIG. 4, so a repeated description is omitted.

An advertisement knowledge graph may be a graph that structures information transmitted through a multimodal LLM (or MLLM), such as advertisement objects (e.g., cars, mobile phones, etc.), cast information (e.g., names), advertisement targets (e.g., men in their 20s to 40s, housewives, etc.), summaries (e.g., an advertisement showing someone drinking a beverage after playing soccer), moods (e.g., active, dynamic, lovely, etc.), and category information.

FIG. 7 may be an example of the advertisement knowledge graph 105 for the advertisement 501, VictoryX "Victory Moment", obtained by inputting the advertisement 501 and the metadata 502 about the advertisement 501 to the multimodal LLM 503.

The multimodal LLM 503 may obtain detailed information about the advertisement 501 by analyzing the advertisement 501 and the metadata 502 about the advertisement 501.

In the embodiment of the disclosure illustrated in FIG. 7, the multimodal LLM 503 may generate the advertisement knowledge graph 105 for a sports drink advertisement by deriving the main audience, advertisement mood, classification of a product of interest to the main audience, advertisement playback time, advertisement filming location, advertisement message, advertisement cast, advertisement category, etc.

The advertisement knowledge graph 105 illustrated in the embodiment of the disclosure of FIG. 7 is merely an example, and may be generated using various methods to include diverse types of information.

Referring back to FIG. 1, in the intermediate advertisement matching operation (S102), the electronic device 100 may perform intermediate advertisement matching at the time when the content playback starts by using the advertisement knowledge graph 105 and the content knowledge graph 106 generated through the methods described with reference to FIGS. 2 to 7.

In an embodiment of the disclosure, the electronic device 100 may obtain an identifier (ID) of the advertisement to be output during the content playback.

A detailed method for performing intermediate advertisement matching is described below.

In an embodiment of the disclosure, the electronic device 100 may insert the advertisement obtained during the intermediate advertisement matching operation (S102) into the content (S103).

In an embodiment of the disclosure, the electronic device 100 may insert into the content the advertisement corresponding to the ID of the advertisement obtained during the intermediate advertisement matching operation (S102).

In an embodiment of the disclosure, during the content playback, the electronic device 100 may output the corresponding advertisement at an output time for the advertisement that is obtained in the intermediate advertisement matching operation (S102).

In an embodiment of the disclosure, the electronic device 100 may continuously perform content playback after outputting the matched advertisement during the content playback (S104).

The embodiment of the disclosure illustrated in FIG. 1 is only an example, and the method of obtaining an intermediate advertisement to be output during content playback by using the advertisement knowledge graph 105 and the content knowledge graph 106, and determining a time at which the corresponding intermediate advertisement is to be inserted, is not limited thereto.

FIG. 8 is a flowchart of an operation method of an electronic device, according to an embodiment of the disclosure.

Referring to FIG. 8 in conjunction with FIGS. 1 and 2, according to an embodiment of the disclosure, the electronic device 100 may receive a user input corresponding to playback of content (S810).

According to an embodiment of the disclosure, based on a content knowledge graph 106 for the content and an advertisement knowledge graph 105 for at least one advertisement, the electronic device 100 may obtain an advertisement to be output during the playback of the content and an output time for the advertisement (S820).

In an embodiment of the disclosure, the content knowledge graph 106 may be obtained through an AI model based on content 201 and metadata 202 about the content 201, and the advertisement knowledge graph 105 may be obtained through an AI model based on at least one advertisement 501 and metadata 502 for each advertisement.

In an embodiment of the disclosure, the content knowledge graph 106 may be obtained by inputting the content 201 and the metadata 202 about the content 201 to the multimodal LLM 203, and the advertisement knowledge graph 105 for the at least one advertisement may be obtained by inputting the at least one advertisement 501 and the metadata 502 about each advertisement to the multimodal LLM 503.

In an embodiment of the disclosure, the content knowledge graph 106 may include at least one of a title, a genre, a plot, a cast, characters, a historical background, a location, section division information, section summary information, section mood information, section location information, section time information, or information about PPL advertisement.

In an embodiment of the disclosure, the advertisement knowledge graph 105 may include at least one of advertisement object, cast, characters, location, historical background, advertisement target, advertisement plot, advertisement mood, or advertisement category information.

In an embodiment of the disclosure, the operation of obtaining the advertisement to be output during the playback of the content and the output time for the advertisement (S820) may include obtaining, based on a knowledge graph for the content and a knowledge graph for at least one advertisement, a list of advertisements selected by rank and an output time for each advertisement included in the list of advertisements, and obtaining, from among the advertisements included in the list of advertisements, an advertisement with the highest rank that belongs to a recommended advertisement category obtained based on context information of the electronic device 100, together with an output time for the advertisement. This is described in detail below.

In an embodiment of the disclosure, the operation of obtaining the advertisement to be output during the playback of the content and the output time for the advertisement (S820) may include obtaining, based on the content knowledge graph 106 for the content and the advertisement knowledge graph 105 for the at least one advertisement, an advertisement list selected by rank and an output time for each advertisement included in the advertisement list, obtaining a second advertisement list by filtering the advertisement list according to a recommended advertisement category obtained based on context information of the electronic device 100 together with an output time for each advertisement in the second advertisement list, and obtaining, from the second advertisement list, an advertisement selected based on advertisement response history information obtained for a user together with an output time for the advertisement. This is described in detail below.

In the disclosure, the context information of the electronic device 100 may include at least one of information about a time at which a playback request is received, information about illuminance (or light level) around the electronic device 100, information about noise around the electronic device 100, or information about a mood around the electronic device 100.

In the disclosure, the advertisement response history information obtained for the user may include at least one of the user's bounce rate by advertisement category, an average viewing time by advertisement category, or an advertisement bounce rate by time interval.

In an embodiment of the disclosure, the operation of obtaining the advertisement to be output during the playback of the content and the output time for the advertisement (S820) may include obtaining an advertisement to be output for each section of the content and an output time for the advertisement.

According to an embodiment of the disclosure, the electronic device 100 may output the advertisement at the output time for the advertisement.

According to an embodiment of the disclosure, the electronic device 100 may output the advertisement obtained in the operation of obtaining the advertisement to be output during the playback of the content and the output time for the advertisement (S820) at the output time for the obtained advertisement.

In an embodiment of the disclosure, user feedback information on the output advertisement may be accumulated and used to update AI models (e.g., 910 and 1010) used in the operation of obtaining the advertisement to be output during the playback of the content and the output time for the advertisement (S820).

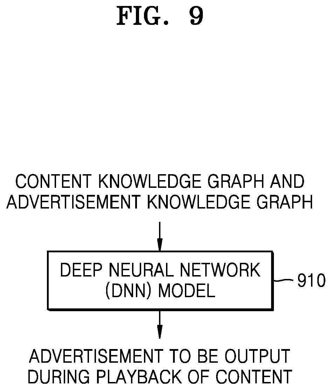

FIG. 9 is a diagram illustrating an example of a method, performed by an electronic device, of obtaining an advertisement to be output during playback of content and an output time for the advertisement by using AI, according to an embodiment of the disclosure.

According to an embodiment of the disclosure, through a deep neural network (DNN) model 910 trained based on a content knowledge graph 106 for content and an advertisement knowledge graph 105 for at least one advertisement, the electronic device 100 may identify or obtain an advertisement to be output during playback of the content and an output time for the advertisement.

AI is a computer system that implements human-level intelligence, enabling machines to learn and make decisions on their own, with recognition rates improving through use. In the disclosure, AI technology is composed of machine learning (deep learning) technology that uses algorithms for classifying/learning the characteristics of input data on their own, and element technologies that simulate functions of a human brain such as cognition, decision-making, etc. by utilizing machine learning algorithms.

The element technologies may include, for example, at least one of linguistic understanding technology that recognizes human language/characters, visual understanding technology that recognizes objects as perceived by human eyes, inference/prediction technology that analyzes information and makes logical inferences and predictions, knowledge representation technology that processes human experience information into knowledge data, or motion control technology that controls autonomous driving of vehicles and the movements of robots.

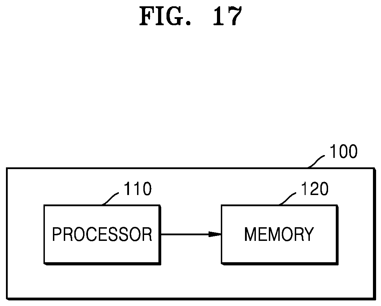

The AI related functions according to the disclosure may be operated through a processor 110 and memory 120 of FIG. 17. The processor 110 may be configured as one or a plurality of processors. In this case, the one or plurality of processors may be a general-purpose processors such as CPUs, APs, and digital signal processors (DSPs), dedicated graphics processors such as graphics processing unit (GPUs) and vision processing units (VPUs), or dedicated AI processors such as neural processing units (NPUs). The one or the plurality of processors control input data to be processed according to predefined operation rules or AI model stored in the memory 120. Alternatively, when the one or plurality of processors are dedicated AI processors, the dedicated AI processors may be designed with a hardware structure specialized for processing a particular AI model.

The predefined operation rules or AI model are created via a training process. In this case, the creation via the training process means that the predefined operation rules or AI model set to perform desired characteristics (or purposes) are created by training a base AI model based on a large number of training data via a learning algorithm. The training process may be performed by the electronic device 100 itself on which AI according to the disclosure is performed, or via a separate server and/or system. Examples of a learning algorithm may include, but are not limited to, supervised learning, unsupervised learning, semi-supervised learning, and reinforcement learning.

An AI model may consist of a plurality of neural network layers. Each of the plurality of neural network layers has a plurality of weight values and performs neural network computations via calculations between a result of computations in a previous layer and the plurality of weight values. The plurality of weight values assigned to each of the plurality of neural network layers may be optimized by a result of training the AI model. For example, the plurality of weight values may be updated to reduce or minimize a loss or cost value obtained in the AI model during a training process.

Examples of AI models may include neural network models, LLMs, multimodal LLMs (or MLLMs), etc.

In an embodiment of the disclosure using a deep learning algorithm, the processor 110 may predict the user's intention for specifying an area by using the pre-trained deep neural network (DNN) model 910.

The pre-trained DNN model 910 may be an AI model trained through learning to identify an advertisement to be output during playback of the content and an output time for the advertisement by obtaining as an input the content knowledge graph 106 for the content and the advertisement knowledge graph 105 for the at least one advertisement.

The DNN model 910 may be, for example, a convolutional neural network (CNN) model. However, the DNN model 910 is not limited thereto, and may be a known AI model including at least one of a recurrent neural network (RNN) model, a restricted Boltzmann machine (RBM), a Deep Belief Network (DBN), a bidirectional recurrent DNN (BRDNN), or a Deep Q-Network (DQN).

The electronic device 100 may also identify an advertisement to be output during playback of content and an output time for the advertisement by using various machine learning algorithms such as regression models and multiple linear regression analysis.

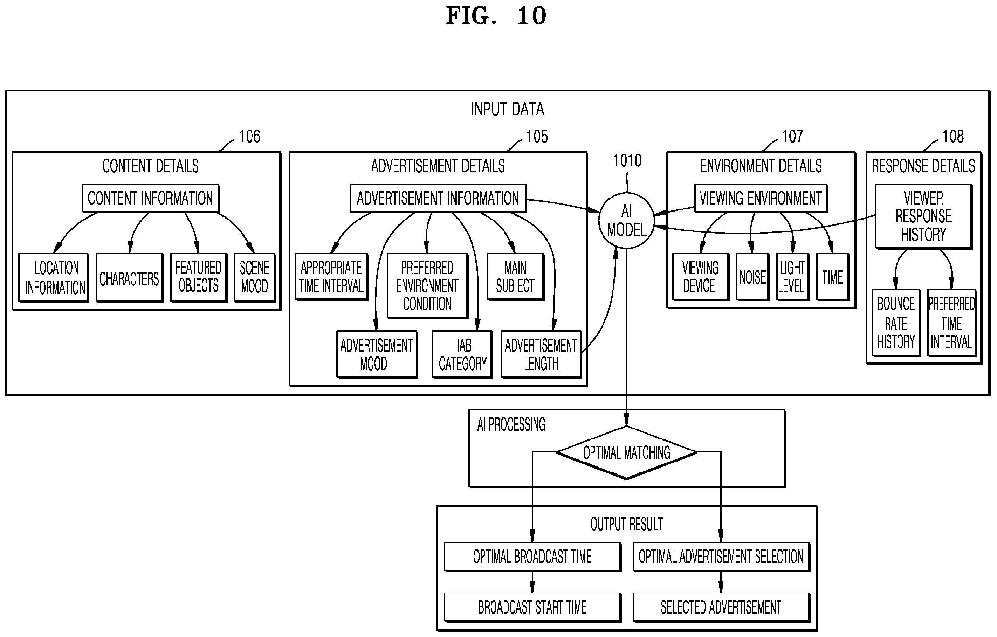

FIG. 10 is a diagram illustrating an example of a method, performed by an electronic device, of obtaining an advertisement to be output during playback of content and an output time for the advertisement by using AI, according to an embodiment of the disclosure.

Descriptions with respect to AI already provided in FIG. 9 may be omitted.

According to an embodiment of the disclosure, the electronic may identify or obtain an advertisement to be output during playback of content and an output time for the advertisement through a DNN model 1010 trained based on a content knowledge graph 106 for the content, an advertisement knowledge graph 105 for at least one advertisement, a knowledge graph 107 for device context, and a knowledge graph 108 for a user's advertisement response history.

In the disclosure, the user's advertisement response history may refer to a history of a user's consumption of advertisement content within the electronic device 100.

In an embodiment of the disclosure, the electronic device 100 may obtain user preference information about advertisement content based on the user's advertisement response history.

In the disclosure, the user's advertisement response history may refer to information about whether the user viewed the advertisement until the end, how long the user viewed the advertisement, etc., obtained by time interval, advertisement category, and relevance to the content.

In an embodiment of the disclosure, the electronic device 100 may use an AI model to obtain user preference information about advertisement content. Such an AI model may be trained to, when receiving the user's advertisement response history as an input, output user preference information about advertisement content.

In an embodiment of the disclosure using a deep learning algorithm, by using the pre-trained DNN model 1010, the processor 110 may identify an advertisement to be output during playback of the content and an output time for the advertisement.

In an embodiment of the disclosure, the pre-trained DNN model 1010 may be an AI model trained through learning to output an advertisement to be output during playback of the content and an output time for the advertisement by obtaining, as an input, the content knowledge graph 106 for the content, the advertisement knowledge graph 105 for the at least one advertisement, the knowledge graph 107 for the device context, and the knowledge graph 108 for the user's advertisement response history.

In an embodiment of the disclosure, the pre-trained DNN model 1010 may be an AI model trained through learning to output an advertisement to be output during playback of the content and an output time for the advertisement by obtaining, as an input, the content knowledge graph 106 for the content, the advertisement knowledge graph 105 for the at least one advertisement, and the knowledge graph 107 for the device context.

In an embodiment of the disclosure, the pre-trained DNN model 1010 may be an AI model trained through learning to output an advertisement to be output during playback of the content and an output time for the advertisement by obtaining, as an input, the content knowledge graph 106 for the content, the advertisement knowledge graph 105 for the at least one advertisement, and the knowledge graph 108 for the user's advertisement response history.

The electronic device 100 may output an advertisement to be output during playback of the content and an output time for the advertisement by using various machine learning algorithms.

In an embodiment of the disclosure, the learning may be performed separately on a server 200 or on electronic device 100 itself.

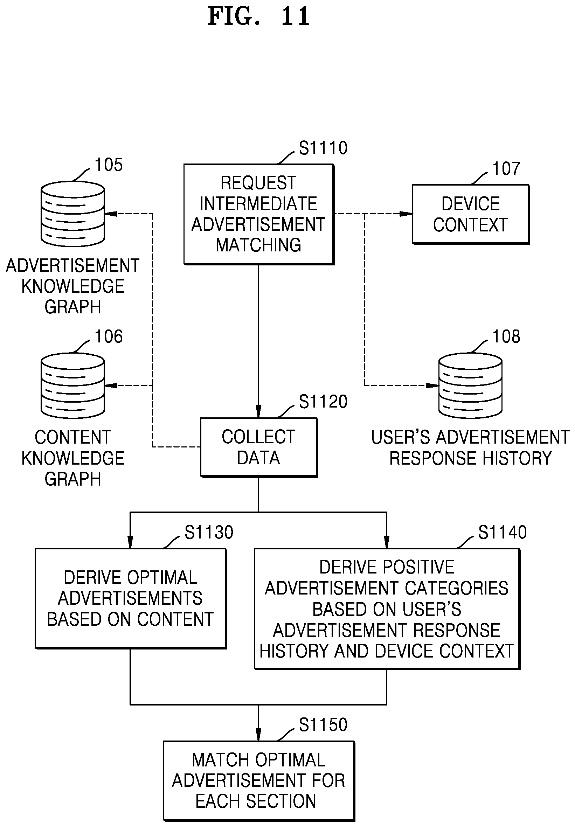

FIG. 11 is a flowchart of an operation method of an electronic device, according to an embodiment of the disclosure.

Referring to FIG. 11, according to an embodiment of the disclosure, the electronic device 100 may receive an intermediate advertisement matching request (S1110).

According to an embodiment of the disclosure, the electronic device 100 may identify that there is an intermediate advertisement matching request when a content playback request is received from a user.

According to an embodiment of the disclosure, the electronic device 100 may generate an intermediate advertisement matching request when a content playback request is obtained from the user.

According to an embodiment of the disclosure, the electronic device 100 may consider that there is an intermediate advertisement matching request when a content playback request is obtained from the user.

In an embodiment of the disclosure, when the intermediate advertisement matching request is identified, the electronic device 100 may obtain a knowledge graph 107 for device context and a knowledge graph 108 for the user's advertisement response history.

In an embodiment of the disclosure, the knowledge graph 107 for the device context may be obtained based on information obtained through various sensors included in a sensor unit 360 of the electronic device 100.

In an embodiment of the disclosure, device context information may be used for intermediate advertisement matching in a form other than a knowledge graph.

In an embodiment of the disclosure, the knowledge graph 108 for the user's advertisement response history may be accumulated information about the user.

In an embodiment of the disclosure, the user may be identified according to an account used on the electronic device 100.

In an embodiment of the disclosure, the user may be identified using various methods such as face recognition, speech recognition, and motion recognition.

In an embodiment of the disclosure, the user's advertisement response history may be used for intermediate advertisement matching in a form other than a knowledge graph. For example, advertisement response history information may be stored and used in a general database format.

In an embodiment of the disclosure, the user's advertisement response history information or a knowledge graph for the user's advertisement response history may be obtained using an AI model.

In an embodiment of the disclosure, the user's advertisement response history information or the knowledge graph 108 for the user's advertisement response history may include information indicating that the user's bounce rate for an advertisement with an advertisement category of 'beer' is 32 % between 12:00 a.m. and 6:00 a.m., 82 % between 6:00 a.m. and 12:00 p.m., 43 % between 12:00 p.m. and 6:00 p.m., and 29 % between 6:00 p.m. and midnight.

According to an embodiment of the disclosure, the electronic device 100 may collect data necessary for matching an intermediate advertisement (S1120).

In an embodiment of the disclosure, the data necessary for matching the intermediate advertisement may include a content knowledge graph 106 for content, an advertisement knowledge graph 105 for at least one advertisement, the knowledge graph 107 for the device context, and the knowledge graph 108 for the user's advertisement response history.

In an embodiment of the disclosure, the electronic device 100 may obtain the content knowledge graph 106 for the content and the advertisement knowledge graph 105 for the at least one advertisement, each generated in advance by the methods described with reference to FIGS. 2 to 7.

In an embodiment of the disclosure, the electronic device 100 may obtain the knowledge graph 108 for the user's advertisement response history generated in advance.

In an embodiment of the disclosure, the knowledge graph 108 for the user's advertisement response history may be updated in real time or periodically.

In an embodiment of the disclosure, when the intermediate advertisement matching request is identified, the electronic device 100 may obtain the knowledge graph 107 for the device context or device context information.

According to an embodiment of the disclosure, the electronic device 100 may derive optimal advertisements based on the content (S1130).

According to an embodiment of the disclosure, by comparing the similarity between the advertisement knowledge graph 105 for the at least one advertisement and the content knowledge graph 106 for the content being played, the electronic device 100 may obtain an advertisement list including the top K advertisements, ranked by similarity to the content knowledge graph 106, and an output time for each advertisement. In this case, K may be a natural number.

According to an embodiment of the disclosure, by comparing the similarity between the advertisement knowledge graph 105 for the at least one advertisement and each section of the content knowledge graph 106 for the content being played, the electronic device 100 may obtain an advertisement list including the top K advertisements, ranked by similarity to each section of the content knowledge graph 106, and an output time for each advertisement. This comparison may be performed by comparing the advertisement knowledge graph 105 to each section of the content knowledge graph 106, as described. Alternatively, the comparison (S1130) and subsequent matching (S1150) may be performed by comparing the advertisement knowledge graph 105 to overall information in the content knowledge graph 106, such as the 'overall summary', main 'genre', or overall 'mood', without performing a per-section analysis. In such an embodiment, a single optimal advertisement may be determined for the entire content, or for a playback session, rather than for each specific section. In this case, K may be a natural number.

According to an embodiment of the disclosure, the electronic device 100 may derive a positive advertisement category based on both the device context and the user's advertisement response history (S1140). In the embodiment of FIG. 11, the positive advertisement categories are derived based on both the device context 107 and the user's advertisement response history 108. In other embodiments, the derivation of positive advertisement categories (S1140) may be based only on the device context 107, without considering the user's advertisement response history. In yet other embodiments, the derivation may be based only on the user's advertisement response history 108, without considering the device context 107.

According to an embodiment of the disclosure, the electronic device 100 may obtain recommended advertisement category information for each section of the content and recommended advertisement category information according to the current device context.

According to an embodiment of the disclosure, the electronic device 100 may obtain advertisement categories that are included in both the recommended advertisement category information for each section of the content and the recommended advertisement category information according to the current device context.

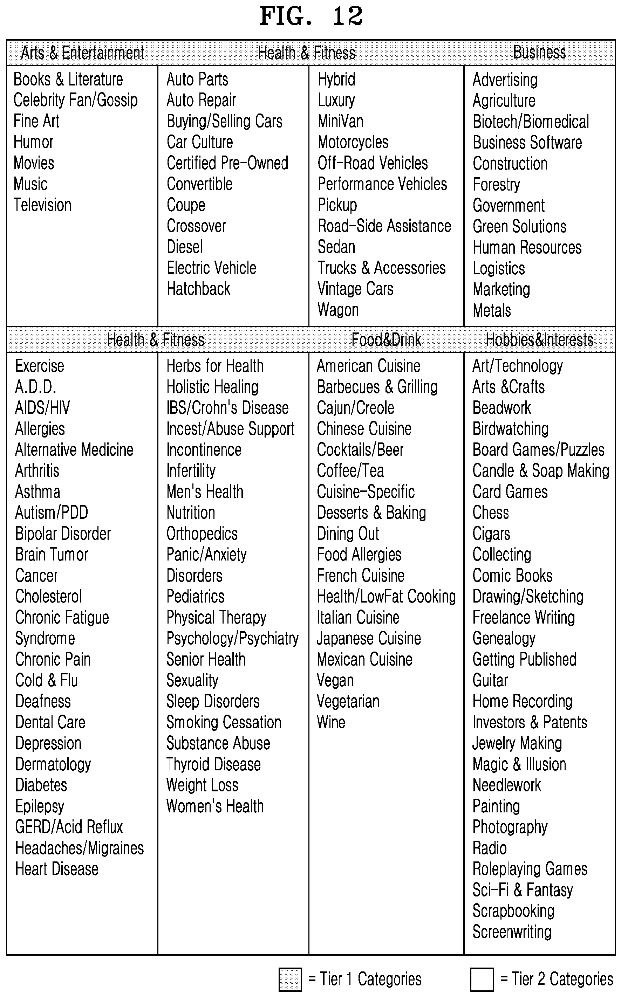

In an embodiment of the disclosure, the advertisement categories may refer to standard advertising categories defined as in FIG. 12. Standard advertisement categories may be denoted by Interactive Advertising Bureau (IAB) categories.

FIG. 12 is a diagram illustrating an example of advertisement categories that may be used in an operation method of the electronic device, according to an embodiment of the disclosure.

In an embodiment of the disclosure, standard advertisement categories may be classified into two tiers, i.e., main classifications and subclassifications, as shown in FIG. 12.

In an embodiment of the disclosure, an advertisement category may represent a main classification or a subclassification shown in FIG. 12.

According to an embodiment of the disclosure, the electronic device 100 may delete advertisement categories whose bounce rate greater than or equal to a defined rate, based on bounce rate information for each time interval included in the user's advertisement response history, from advertisement categories included in both the recommended advertisement category information for each section of the content and the recommended advertisement category information according to the current device context.

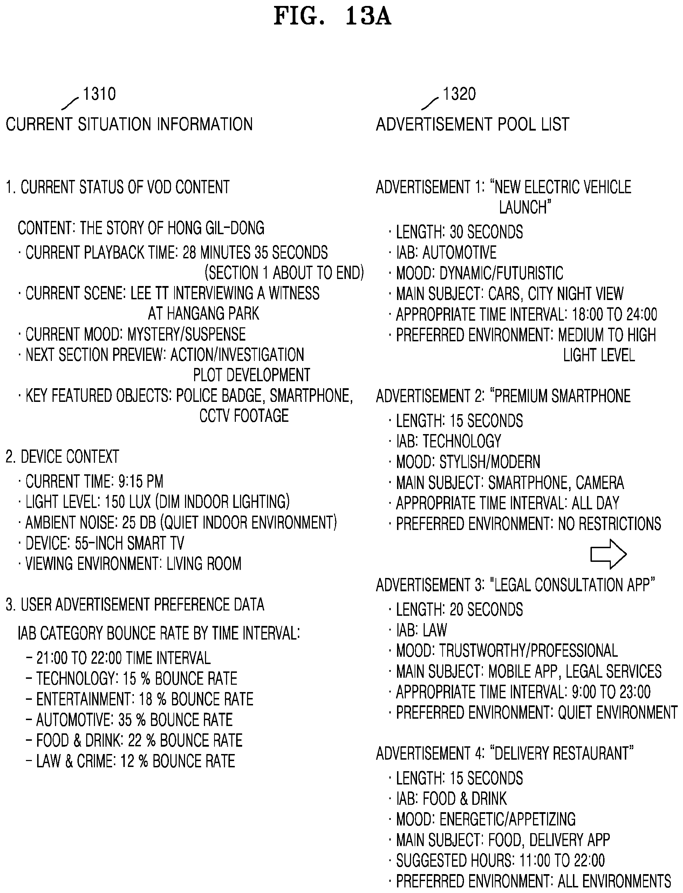

According to an embodiment of the disclosure, the electronic device 100 may delete advertisement categories with a bounce rate greater than or equal to a defined rate, based on bounce rate information for each time interval included in the user's advertisement response history, from advertisement categories included in both the recommended advertisement category information for each section of the content and the recommended advertisement category information according to the current device context, and identify the remaining advertisement categories as positive advertisement categories. For example, the 'defined rate' used for this filtering step may be a configurable threshold. In some embodiments, this 'defined rate' may be set to 30%. In such a case, any category with a bounce rate greater than or equal to 30% (e.g., the 'Automotive' category at 35% in FIG. 13A) would be deleted. In other embodiments, the defined rate may be 25% or 20%. A 'low bounce rate' (e.g., as shown for 'Law & Crime' at 12% in FIG. 13A) may be considered a rate below 20%, or preferably below 15%.

According to an embodiment of the disclosure, the electronic device 100 may derive an optimal advertisement for each section of the content (S1150).

According to an embodiment of the disclosure, the electronic device 100 may filter out and then delete, from the advertisement list derived in the operation of deriving the optimal advertisements based on the content (S1130), advertisements that do not belong to the positive advertisement categories obtained in the positive advertisement category derivation operation (S1140), and then match, derive, or obtain an advertisement with the highest rank among the remaining advertisements as the optimal advertisement for each section of the content.

According to an embodiment of the disclosure, the electronic device 100 may determine, as an advertisement to be output in the corresponding section, an advertisement with the highest rank from among the advertisements that belong to the positive advertisement categories derived in the positive advertisement category derivation operation (S1140), based on the list of top advertisements for each section obtained in the operation of deriving optimal advertisements based on the content (S1130).

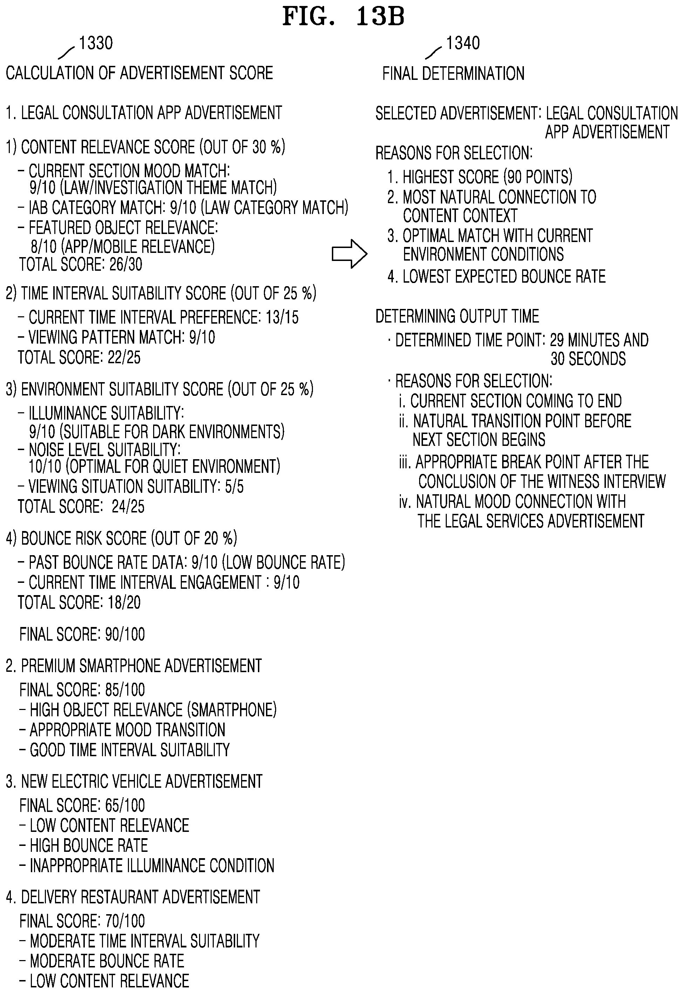

FIG. 13A is a diagram illustrating examples of input information for obtaining an advertisement and an output time for the advertisement, according to the operation method of the electronic device, according to an embodiment of the disclosure, and FIG. 13B is a diagram illustrating an example of a process of obtaining an advertisement and an output time for the advertisement according to an operation method of an electronic device, according to an embodiment of the disclosure.

Current situation information 1310 may include a content knowledge graph 106 for content, a knowledge graph 107 for device context, and a knowledge graph 108 for a user's advertisement response history.

In the embodiment of the disclosure illustrated in FIG. 13A, the content knowledge graph 106 for the content may include information indicating that the content currently being played is The Story of Hong Gil-dong, 28 minutes and 35 seconds have elapsed since the start of playback of the current content, meaning that section 1 is about to end, a scene in which the main character is interviewing a witness in Hangang Park is being played, the scene has a mysterious and suspenseful mood, an action and investigation material will be played in a next section of the content, and objects such as a police badge, a smartphone, and CCTV footage are identified.

In the embodiment of the disclosure illustrated in FIG.13A, the knowledge graph 107 for the device context may include information indicating that the time when the content is being played is 9:15 p.m., the content is being viewed in a dim indoor lighting condition with an illuminance of about 150 lux, the ambient noise of the electronic device 100 is about 25 decibels (dB), and the electronic device 100 on which the content is being played is a 55-inch smart TV. In this example, the illuminance of 'about 150 lux' is considered to be 'dim indoor lighting'. For the purpose of this system, 'dim' or 'dark' environments may, for example, be defined as an illuminance of less than 300 lux, or preferably less than 200 lux. The 'about 25 decibels (dB)' is considered a 'quiet indoor environment'. A 'quiet' environment may, for example, be defined as an ambient noise level of less than 40 dB, or preferably less than 30 dB.

In the embodiment of the disclosure illustrated in FIG.13A, the knowledge graph 108 for the user's advertisement response history may include information indicating that, between 9:00 p.m. and 10:00 p.m., which is the current time interval, the user's advertisement bounce rate is 15 % for the technology category, 18 % for the entertainment category, 35 % for the automotive category, 22 % for the food & drink category, and 12 % for the law & crime category.

For example, when the user's advertisement bounce rate for the technology category is 15%, this may indicate that the user has a 15% probability of leaving before completing the viewing in the advertisement in the technology category.

In the embodiment of the disclosure illustrated in FIG. 13A, an advertisement pool list 1320 including advertisement knowledge graphs 105 for at least one advertisement may be used.

In the embodiment of the disclosure illustrated in FIG. 13A, the advertisement pool list 1320 may include an advertisement for "new electric vehicle launch" belonging to the automotive category, an advertisement for "premium smartphone" belonging to the technology category, an advertisement for "legal consultation app" belonging to the law category, and an advertisement for "delivery restaurant" belonging to the food & drink category.

In the embodiment of the disclosure illustrated in FIG. 13A, the advertisement pool list 1320 may be stored as knowledge graphs for each advertisement, and each knowledge graph may include information such as advertisement length, advertisement category, mood, appropriate advertisement time interval, preferred environment, and advertisement object for each advertisement.

According to an embodiment of the disclosure, the electronic device 100 may calculate an advertisement score for each advertisement included in the advertisement pool list 1320 (1330).

According to an embodiment of the disclosure, the electronic device 100 may obtain a final advertisement score for each advertisement in the advertisement pool list 1320 by obtaining a content relevance score, a time interval suitability score, an environment suitability score, and a score based on a bounce risk and then applying defined weights to these scores.

The electronic device 100 may obtain a final advertisement score for each advertisement by applying a weight of 30 % to the content relevance score, a weight of 25 % to the time interval suitability score, a weight of 25 % to the environment suitability score, and a weight of 20 % to the score based on the bounce risk.

According to an embodiment of the disclosure, the electronic device 100 may obtain an advertisement score by additionally considering a score according to the importance of an advertisement. For example, an advertisement with a high advertising cost may receive a high score based on its importance. In this case, a weight of the score based on the importance of the advertisement may be adjusted upward, while the weights of the content relevance score, time interval suitability score, environment suitability score, and score based on the bounce risk may be adjusted downward.

Such weighting is merely an example, and may be changed based on history information obtained for the user and configuration information received from the user.

According to the embodiment of the disclosure illustrated in FIG.13B, the electronic device 100 may obtain a final advertisement score of 65 points for the advertisement in the automotive category, 85 points for the advertisement in the technology category, 90 points for the advertisement in the law category, and 70 points for the advertisement in the food & drink category.

According to the embodiment of the disclosure illustrated in FIG.13B, based on the advertisement scores for each advertisement, the electronic device 100 may identify or finally determine the advertisement in the law category with the highest advertisement score as an advertisement to be output during content playback (1340).

According to the embodiment of the disclosure illustrated in FIG.13B, the electronic device 100 may identify an output time for the advertisement in the law category identified as the advertisement to be output as a time point that is 29 minutes and 30 seconds after the start of content playback.

According to an embodiment of the disclosure, the electronic device 100 may identify the output time for the advertisement in the law category identified as an advertisement to be output as 29 minutes and 30 seconds after the start of content playback by taking into account that the section currently being played is coming to an end, that this time point is a natural transition point before the start of the next section, that it is an appropriate break point for output after the witness interview has ended, that the mood of the content naturally connects to the advertisement in the law category, etc.

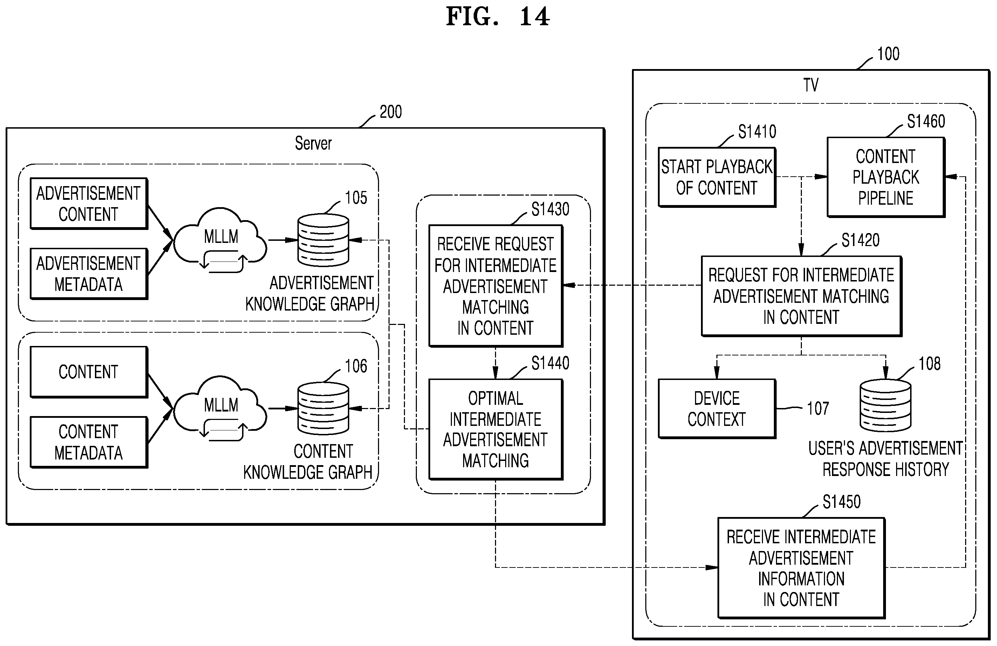

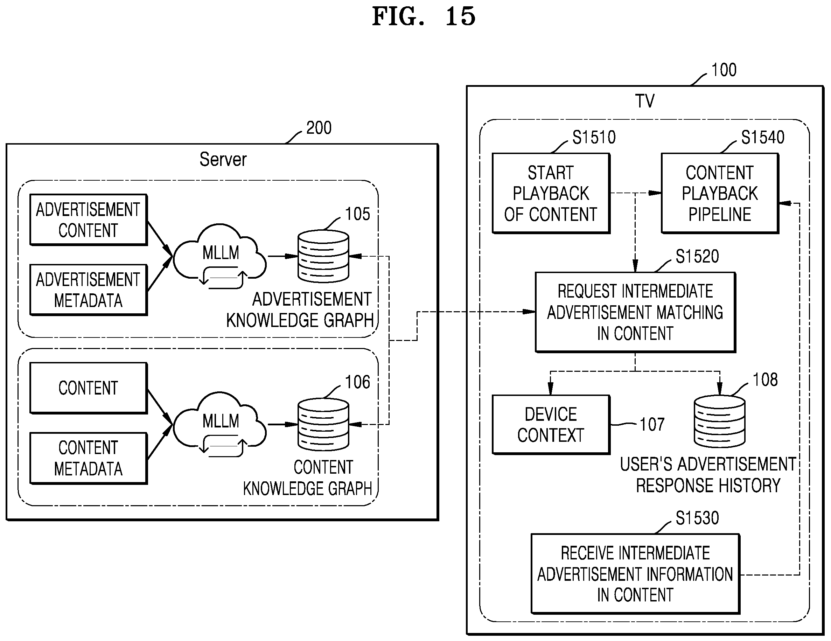

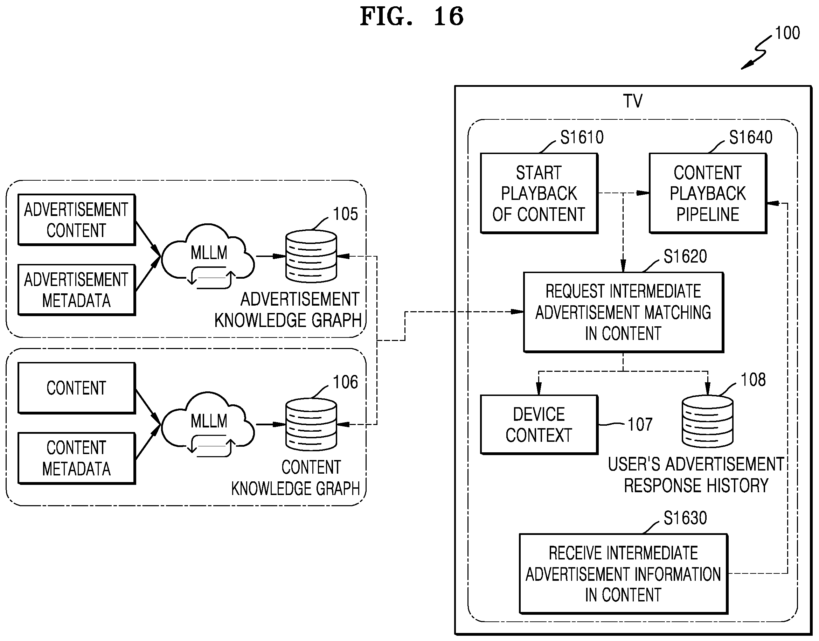

FIG. 14 is a diagram illustrating an example of an operation method of an electronic device using a server, according to an embodiment of the disclosure. The electronic device 100 and server 200 system described herein may be implemented in one of several different architectures, as illustrated in FIGS. 14-16. These architectures include, but are not limited to: (a) a server-based architecture (as shown in FIG. 14), wherein a server 200 performs the knowledge graph generation and the optimal advertisement matching (S1440); (b) a hybrid architecture (as shown in FIG. 15), wherein the server 200 performs the knowledge graph generation and storage, but the electronic device 100 obtains the knowledge graphs and performs the matching (S1520) locally; and (c) an on-device architecture (as shown in FIG. 16), wherein the electronic device 100 performs all operations locally, including knowledge graph generation and matching (S1620).

Any of the method steps described herein may be performed on the electronic device, the server, or be distributed between them.

In the embodiment of the disclosure illustrated in FIG. 14, the process of obtaining the content knowledge graph 106 described with reference to FIGS. 2 to 4 and the process of obtaining the advertisement knowledge graph 105 described with reference to FIGS. 5 to 7 may be performed by the server 200. Furthermore, the obtained advertisement knowledge graph 105 and content knowledge graph 106 may be stored in the server 200.

In the embodiment of the disclosure illustrated in FIG. 14, the electronic device 100 may receive a content playback request from the user and start playback of content (S1410).

In the embodiment of the disclosure illustrated in FIG. 14, at the time when the playback of the content starts after receiving the content playback request from the user, the electronic device 100 may generate a request for intermediate advertisement matching within the content and then transmit the request to the server 200 (S1420).

In an embodiment of the disclosure, when transmitting the request for intermediate advertisement matching in the content to the server 200, the electronic device 100 may also transmit context information 107 of the electronic device 100 and information 108 about the user's advertisement response history.

In an embodiment of the disclosure, when transmitting the request for intermediate advertisement matching in the content to the server 200, the electronic device 100 may also transmit information about the content being played on the electronic device 100.

In an embodiment of the disclosure, when transmitting the request for intermediate advertisement matching in the content to the server 200, the electronic device 100 may also transmit an ID of the content being played on the electronic device 100.

In the embodiment of the disclosure illustrated in FIG. 14, the server 200 may receive, from the electronic device 100, the request for intermediate advertisement matching within the content (S1430).

In the embodiment of the disclosure illustrated in FIG. 14, the server 200 may receive, from the electronic device 100, the context information 107 of the electronic device 100 and the information 108 about the user's advertisement response history, together with the request for intermediate advertisement matching within the content.

In the embodiment of the disclosure illustrated in FIG. 14, the server 200 may match or obtain an optimal intermediate advertisement to be output during playback of the content, based on the context information 107 of the electronic device 100 and the information 108 about the user's advertisement response history, which are obtained from the electronic device 100, and the content knowledge graph 106 for the content and the advertisement knowledge graph 105 for at least one advertisement, which are prestored in the server 200 (S1440).

In the embodiment of the disclosure illustrated in FIG. 14, the server 200 may identify the content knowledge graph 106 for the content being played on the electronic device 100, based on information about the content obtained from the electronic device 100.

In the embodiment of the disclosure illustrated in FIG. 14, the server 200 may obtain an output time for the optimal intermediate advertisement to be output during playback of the content.

In the embodiment of the disclosure illustrated in FIG. 14, the server 200 may transmit, to the electronic device 100, the optimal intermediate advertisement to be output during playback of the content and an output time for the intermediate advertisement.

In an embodiment of the disclosure, the server 200 may transmit, to the electronic device 100, an ID of the optimal intermediate advertisement to be output during playback of the content and the output time for the intermediate advertisement.

In the embodiment of the disclosure illustrated in FIG. 14, the electronic device 100 may obtain, from the server 200, the advertisement to be output during the playback of the content and the output time for the advertisement from the server 200 (S1450).

In the embodiment of the disclosure illustrated in FIG. 14, the electronic device 100 may output the obtained optimal intermediate advertisement at the obtained output time for the advertisement and continue playback of the content (S1460).

FIG. 15 is a diagram illustrating an example of an operation method of an electronic device using a server, according to an embodiment of the disclosure.

In the embodiment of the disclosure illustrated in FIG. 15, the process of obtaining the content knowledge graph 106 described with reference to FIGS. 2 to 4 and the process of obtaining the advertisement knowledge graph 105 described with reference to FIGS. 5 to 7 may be performed by the server 200. Furthermore, the obtained advertisement knowledge graph 105 and content knowledge graph 106 may be stored in the server 200.

In the embodiment of the disclosure illustrated in FIG. 15, the electronic device 100 may receive a content playback request from the user and start playback of content (S1510).

In the embodiment of the disclosure illustrated in FIG. 15, at the time when the playback of the content starts after receiving the content playback request from the user, the electronic device 100 may match or identify an intermediate advertisement to be inserted into the content and output during the playback of the content (S1520).

In an embodiment of the disclosure, the electronic device 100 may obtain the context information 107 of the electronic device 100 and the information 108 about the user's advertisement response history.

In the embodiment of the disclosure illustrated in FIG. 15, the electronic device 100 may obtain, from the server 200, the content knowledge graph 106 for the content being played and the advertisement knowledge graph 105 for at least one advertisement.

In the embodiment of the disclosure illustrated in FIG. 15, the electronic device 100 may match or obtain an optimal intermediate advertisement to be output during the playback of the content, based on the obtained context information 107 of the electronic device 100 and information 108 about the user's advertisement response history, and the content knowledge graph 106 for the content and the advertisement knowledge graph 105 for at least one advertisement, which are obtained from the server 200 .

In the embodiment of the disclosure illustrated in FIG. 15, the electronic device 100 may receive or obtain an advertisement determined to be an optimal intermediate advertisement to be output during the playback of the content (S1530).

In the embodiment of the disclosure illustrated in FIG. 15, the electronic device 100 may output the obtained intermediate advertisement at the obtained output time and continue playback of the content (S1540).

FIG. 16 is a diagram illustrating an example of an operation method of an electronic device operating on-device, according to an embodiment of the disclosure.

In the embodiment of the disclosure illustrated in FIG. 16, the process of obtaining the content knowledge graph 106 described with reference to FIGS. 2 to 4 and the process of obtaining the advertisement knowledge graph 105 described with reference to FIGS. 5 to 7 may be performed by the electronic device 100. Furthermore, the obtained advertisement knowledge graph 105 and content knowledge graph 106 may be stored in the electronic device 100.

In the embodiment of the disclosure illustrated in FIG. 16, the electronic device 100 may receive a content playback request from the user and start playback of content (S1610).

In the embodiment of the disclosure illustrated in FIG. 16, at the time when the playback of the content starts after receiving the content playback request from the user, the electronic device 100 may match or identify an intermediate advertisement to be inserted into the content and output (S1620).

In an embodiment of the disclosure, the electronic device 100 may obtain the context information 107 of the electronic device 100 and the information 108 about the user's advertisement response history.

In the embodiment of the disclosure illustrated in FIG. 16, the electronic device 100 may obtain the content knowledge graph 106 for the content being played and the advertisement knowledge graph 105 for at least one advertisement, which are stored in the electronic device 100.

In the embodiment of the disclosure illustrated in FIG. 16, the electronic device 100 may match or obtain an optimal intermediate advertisement to be output during playback of the content, based on the obtained context information 107 of the electronic device 100 and information 108 about the user's advertisement response history, and the content knowledge graph 106 for the content and the advertisement knowledge graph 105 for the at least one advertisement, which are obtained from the server 200 .

In the embodiment of the disclosure illustrated in FIG. 16, the electronic device 100 may obtain the optimal intermediate advertisement to be output during playback of the content and obtain the output time for the obtained optimal intermediate advertisement.

In the embodiment of the disclosure illustrated in FIG. 16, the electronic device 100 may receive or obtain an advertisement determined as an optimal intermediate advertisement to be output during the playback of the content (S1630).

In the embodiment of the disclosure illustrated in FIG. 16, the electronic device 100 may output the obtained intermediate advertisement at the obtained output time and continue playback of the content (S1640).

FIG. 17 is a block diagram of an electronic device according to an embodiment of the disclosure.

Referring to FIG. 17, the electronic device 100 may include a processor 110 and a memory 120.

The memory 120 may store programs necessary for processing or control by the processor 110. In addition, the memory 120 may store data input to or output from the electronic device 100.

The memory may include at least one of internal memory (not shown) or external memory (not shown).

The memory 120 may include at least one type of storage medium, i.e., at least one of a flash memory-type memory, a hard disk-type memory, a multimedia card micro-type memory, a card-type memory (e.g., a Secure Digital (SD) or extreme Digital (xD) memory), random access memory (RAM), static RAM (SRAM), read-only memory (ROM), electrically erasable programmable ROM (EEPROM), PROM, magnetic memory, a magnetic disc, or an optical disc.

The internal memory may include, for example, at least one of volatile memory (e.g., dynamic RAM (DRAM), SRAM, synchronous dynamic RAM (SDRAM), etc.), non-volatile memory (e.g., one time programmable ROM (OTPROM), programmable ROM (PROM), erasable and programmable ROM (EPROM), EEPROM, mask ROM, flash ROM, etc.), a hard disk drive (HDD), or a solid state drive (SSD).

According to an embodiment of the disclosure, the processor 110 may load instructions or data received from at least one of non-volatile memory or other components into volatile memory for processing. In addition, the processor 110 may retain, in non-volatile memory, data received from or generated by other components.

The external memory may include, for example, at least one of Compact Flash (CF), SD, micro-SD, mini-SD, xD, or Memory Stick.

The memory 120 may store one or more instructions that are executable by the processor 110.

In an embodiment of the disclosure, the memory 120 may store one or more instructions executable by the processor 110 separately in a plurality of memories 120.

In an embodiment of the disclosure, the memory 120 may store one or more instructions that are executable by the at least one processor 110 individually or collectively.

In an embodiment of the disclosure, the memory 120 may store various pieces of information input via an input/output (I/O) interface (not shown).

In an embodiment of the disclosure, the memory 120 may store at least one of instructions, algorithms, data structures, program code, or application programs readable by the processor 110. The instructions, algorithms, data structures, and program code stored in the memory 120 may be implemented in programming or scripting languages such as C, C++, Java, assembler, etc.

In an embodiment of the disclosure, the memory 120 may store instructions for controlling the processor 110 to receive a content playback request from a user, obtain an advertisement to be output during playback of content and an output time for the advertisement, based on a knowledge graph for the content and a knowledge graph for at least one advertisement, and play the advertisement at the output time for the advertisement.

The processor 110 may execute an operating system (OS) and various applications stored in the memory 120 when there is a user input or a preset stored condition is satisfied.

The processor 110 may include RAM that stores signals or data input from outside the electronic device 100 or is used as a storage area corresponding to various operations performed by the electronic device 100, and ROM that stores a control program for controlling the electronic device 100.

The processor 110 may include at least one processing circuitry.

The processor 110 may include a single core, a dual core, a triple core, a quad core, or a number of cores equal to multiples thereof. Furthermore, the processor 110 may include a plurality of processors. For example, the processor 110 may be implemented as a main processor (not shown) and a sub processor (not shown) operating in a sleep mode.

In addition, the processor 110 may include at least one of a CPU, a GPU, or a VPU. Alternatively, according to an embodiment of the disclosure, the processor 110 may be implemented as a SoC that integrates at least one of a CPU, a GPU, or a VPU.

The processor 110 may include various processing circuitry and/or a plurality of processors. For example, the term "processor" as used herein, including that in the claims, may include various processing circuitry including at least one processor. One or more of the at least one processor 110, individually and/or collectively in a distributed form, may be configured to perform various functions described herein. As used herein, "a processor," "at least one processor," and "one or more processors" may be configured to perform various functions. However, these terms cover, without limitation, situations in which one processor performs some of recited functions and another processor (other processors) perform other functions, as well as situations in which a single processor may perform all of the recited functions. Furthermore, the at least one processor 110 may include a combination of processors that perform various functions among the recited functions in a distributed manner. The at least one processor 110 may execute program instructions to accomplish or perform various functions.

The processor 110 may control various components of the electronic device 100 by executing one or more instructions stored in the memory 120.

In an embodiment of the disclosure, the processor 110 may receive a content playback request from a user, obtain an advertisement to be output during playback of content and an output time for the advertisement, based on a knowledge graph for the content and a knowledge graph for at least one advertisement, and play the advertisement at the output time for the advertisement.

In an embodiment of the disclosure, the processor 110 may obtain a list of advertisements selected by rank, based on the knowledge graph for the content and the knowledge graph for the at least one advertisement, and an output time for each advertisement included in the list of advertisements, and obtain, from among the advertisements included in the list of advertisements, an advertisement with the highest rank that belongs to a recommended advertisement category obtained based on context information of the electronic device 100, together with an output time for the advertisement.

In an embodiment of the disclosure, the processor 110 may obtain, based on the knowledge graph for the content and the knowledge graph for the at least one advertisement, an advertisement list selected by rank and an output time for each advertisement included in the advertisement list, obtain a second advertisement list by filtering the advertisement list according to a recommended advertisement category obtained based on context information of the electronic device 100 together with an output time for each advertisement included in the second advertisement list, and obtain, from the second advertisement list, an advertisement selected based on advertisement response history information obtained for the user together with an output time for the advertisement.

In an embodiment of the disclosure, the processor 110 may obtain advertisements to be output by section of the content and output time for the advertisements.

In an embodiment of the disclosure, the processor 110 may obtain an advertisement to be output from the server 200 and an output time for the advertisement.

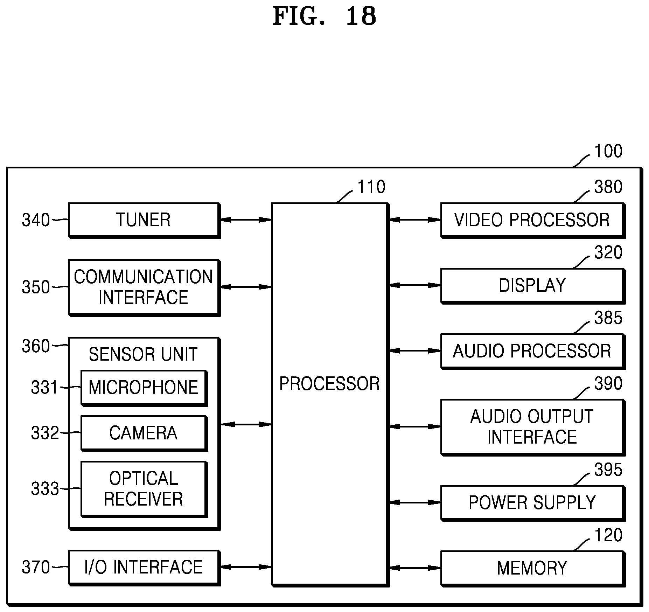

FIG. 18 is a detailed block diagram of an electronic device according to an embodiment of the disclosure.

Referring to FIG. 18, the electronic device 100 may include a tuner 340, a processor 110, a display 320, a communication interface 350, a sensor unit 360, an I/O interface 370, a video processor 380, an audio processor 385, an audio output interface 390, memory 120, and a power supply 395.

Hereinafter, the same components and operations as those described with reference to FIG. 17 may be assigned the same reference numerals, and repeated descriptions are omitted.

The processor 110 in FIG. 18 is a component corresponding to the processor 110 in FIG. 17, and the memory 120 in FIG. 18 is a component corresponding to the memory 120 in FIG. 17. Therefore, descriptions already provided with respect to FIG. 17 are omitted hereafter.

According to an embodiment of the disclosure, the communication interface 350 may include a Wi-Fi module, a Bluetooth module, an infrared communication module, a wireless communication module, a local area network (LAN) module, an Ethernet module, a wired communication module, etc. In this case, each communication module may be implemented in the form of at least one hardware chip.

The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as ZigBee, 3rd generation (3G), 3rd Generation Partnership Project (3GPP), long-term evolution (LTE), LTE advanced (LTE-A), 4th generation (4G), and 5th generation (5G).

According to an embodiment of the disclosure, the communication interface 350 may receive a user input from an external device.

In an embodiment of the disclosure, the communication interface 350 may communicate with an external device such as a server.

According to an embodiment of the disclosure, the communication interface 350 may include a communication interface that performs wireless communication such as Bluetooth with a server, etc., and a communication interface that is connected to an external device, such as via an HDMI port. In this case, the communication interface that performs wireless communication such as Bluetooth with the server, etc. may perform connection with other devices and video/audio data transmission. The communication interface that is connected to the external device, such as via the HDMI port, may include not only an input port that receives an input, but also an output port, such as DP, HDMI, red, green, and blue (RGB), Digital Visual Interface (DVI), or Thunderbolt, for transmitting video or audio signals to an external display or speaker.

By performing amplification, mixing, resonance, etc. of a broadcast signal received in a wired or wireless manner, the tuner 340 may tune and then select only a frequency of a channel that the electronic device 100 desires to receive from among many radio wave components. The broadcast signal includes audio, video, and additional information (e.g., an electronic program guide (EPG)).

The tuner 340 may receive broadcast signals from various sources such as terrestrial broadcasting, cable broadcasting, satellite broadcasting, Internet broadcasting, etc. The tuner 340 may receive a broadcast signal from a source such as analog broadcasting, digital broadcasting, or the like.

The sensor unit 360 detects sounds around the electronic device 100, images around the electronic device 100, or interactions with the surroundings of the electronic device 100, and may include at least one of a microphone 331, a camera 332, or an optical receiver 333. According to an embodiment of the disclosure, the sensor unit 360 may detect conditions around the electronic device 100 and transmit information about the detected conditions to the processor 110.

The microphone 331 may receive the voice uttered by the user and sounds occurring around the electronic device 100. The microphone 331 may convert the received voice or sounds into electrical signals and output the electrical signals to the processor 110. The microphone 331 may use various noise removal algorithms to remove noise occurring in the process of receiving external sound signals.

The camera 332 may obtain image frames, such as still images or moving images. An image captured by an image sensor may be processed by the processor 110 or a separate image processor (not shown).

An image frame processed by the camera 332 may be stored in the memory 120 or transmitted to outside via the communication interface 350. The camera 332 may include two or more cameras depending on a configuration of the electronic device 100.

The optical receiver 333 may receive an optical signal (including a control signal) received via an external remote control device (not shown). The optical receiver 333 may receive an optical signal corresponding to a user input (e.g., touching, pressing, touch gesture, voice, or motion) from a remote control device (not shown). A control signal may be extracted from the received optical signal according to control by the processor 110. For example, the optical receiver 333 may receive a control signal corresponding to a channel up/down button for changing channels from a remote control device (not shown).

The sensor unit 360 is illustrated as including, but not limited to, the microphone 331, the camera 332, and the optical receiver 333, and may include at least one of, but not limited to, a magnetic sensor, an acceleration sensor, a temperature/humidity sensor, an infrared sensor, a gyroscope sensor, a position sensor such as a global positioning system (GPS), a barometric pressure sensor, a proximity sensor, an RGB sensor, an illuminance sensor, or a Wi-Fi signal receiver. Because one of ordinary skill in the art may intuitively infer a function of each sensor from its name, a detailed description thereof will be omitted.

The sensor unit 360 is illustrated as being provided in the electronic device 100 itself, but is not limited thereto, and may be included in a control device, such as remote control, which is located independently of the electronic device 100 and communicates with the electronic device 100. When the sensor unit 360 is provided in the control device of the electronic device 100, the control device may digitize information detected by the sensor unit 360 and transmit the resulting information to the electronic device 100. The control device may communicate with the electronic device 100 by using short-range communication including infrared, Wi-Fi, or Bluetooth.

For example, the microphone 331 may be included in the electronic device 100 itself, but may also be provided in the control device, such as the remote control, which is located independently of the electronic device 100 and communicates with the electronic device 100.

In an embodiment of the disclosure, when the microphone 331 is included in the remote control, an analog audio signal may be received via the microphone 331, digitized by the remote control, and transmitted to the electronic device 100, such as a TV. In this case, the remote control may communicate with the electronic device 100 by using short-range communication including infrared, Wi-Fi, or Bluetooth.

In an embodiment of the disclosure, the electronic device 100 may include a plurality of communication interfaces 350 capable of performing various short-range communications, including infrared, Wi-Fi, or Bluetooth.

In an embodiment of the disclosure, the electronic device 100 may include the plurality of communication interfaces 350 including a communication interface for communicating with the server 200 and a communication interface for communicating with the remote control, which are of different types from each other. For example, the communication interface for communicating with the server may use an Ethernet modem, a Wi-Fi module, or the like, while the communication interface for communicating with the remote control may use a Bluetooth module.

In an embodiment of the disclosure, the electronic device 100 may include the communication interface 350 including the communication interface for communicating with the server and the communication interface for communicating with the remote control, which are identical to each other. For example, the communication interface for communicating with the server and the communication interface for communicating with the remote control may both use a Wi-Fi module.

In an embodiment of the disclosure, a device such as a smartphone on which a remote control application is installed may perform the same functions as the remote control described above. That is, the device on which the remote control application is installed may control the electronic device 100 and perform a speech recognition function.

In addition to smartphones, devices on which a remote control application may be installed may include any device capable of operating with an installed application, such as an AI speaker.

In an embodiment of the disclosure, a device on which a remote control application is installed may be capable of receiving user's speech.

In an embodiment of the disclosure, the electronic device 100 may include a plurality of communication interfaces capable of implementing the above-described communication method so as to transmit and receive data to and from remote control or a device on which a remote control application may be installed by using Wi-Fi, Bluetooth, infrared, or the like, and control the remote control and the device.

According to control by the processor 110, the I/O interface 370 receives video (e.g., a moving image, etc.), audio (e.g., voice, music, etc.), additional information (e.g., an electronic program guide (EPG), etc.), etc. from outside the electronic device 100. The I/O interface 370 may include one of an HDMI, a mobile high-definition link (MHL), a universal serial bus (USB), a DP, a Thunderbolt, a video graphics array (VGA) port, an RGB port, a D-subminiature (D-sub), a DVI, a component jack, and a PC port.

The video processor 380 performs processing on video data received by the electronic device 100. The video processor 380 may perform various types of image processing, such as decoding, scaling, noise reduction, frame rate conversion, resolution conversion, etc. on the video data.

The display 320 may generate a driving signal by converting an image signal, a data signal, an on-screen display (OSD) signal, a control signal, etc. processed by the processor 110. The display 320 may be implemented as a plasma display panel (PDP), a liquid crystal display (LCD), an organic light-emitting diode (OLED) display, a flexible display, or the like, and may also be implemented as a three-dimensional (3D) display. Furthermore, the display 320 may be formed as a touch screen to serve as an input device as well as an output device.

The display 320 may output various content input via a communication interface (not shown) or the I/O interface 370, or output images stored in the memory 120. In addition, the display 320 may output on a screen information input by the user via the I/O interface 370.

The display 320 may include a display panel. The display panel may be an LCD panel or panels including various light-emitting elements such as an LED, an OLED, and a cold cathode fluorescent lamp (CCFL). Furthermore, the display panel may include not only a flat display device but also a curved display device with a screen having a curvature or a flexible display device with an adjustable curvature. The display panel may be a 3D display or an electrophoretic display.

An output resolution of the display panel may include, for example, High Definition (HD), Full HD, Ultra HD, or resolutions higher than the Ultra HD.

In the embodiment of the disclosure of FIG. 18, the electronic device 100 is illustrated as including a display, but this is not limited thereto. The electronic device 100 may be connected to a separate display device including a display via wired or wireless communication, and configured to transmit video/audio signals to the display device.

In an embodiment of the disclosure, the electronic device 100 may have a built-in display, but is not limited thereto, and may be implemented in a form that allows operation by being connected to an external display even without a built-in display.

For example, the electronic device 100 may be implemented in a form that outputs images to a separate external display through a video or audio output port, such as an STB that is without a display or includes a simple display for notifications and the like.

In this case, the electronic device 100 may include an output port for outputting video or audio signals to a display. The output port may have a form that allows simultaneous transmission of video signals and audio signals, such as HDMI, DP, or Thunderbolt, or may have separate ports for separately transmitting video signals and audio signals.

In an embodiment of the disclosure, the electronic device 100 may transmit video or audio signals via wired or wireless communication or the like.

The audio processor 385 processes audio data. The audio processor 385 may perform various types of processing, such as decoding, amplification, noise reduction, etc., on the audio data. Moreover, the audio processor 385 may include a plurality of audio processing modules to process audio corresponding to a plurality of pieces of content.

According to control by the processor 110, the audio output interface 390 outputs audio contained in a broadcast signal received via the tuner 340. The audio output interface 390 may output audio (e.g., a voice and a sound) input via the communication interface 350 or the I/O interface 370. Furthermore, the audio output interface 390 may output audio stored in the memory 120 according to control by the processor 110. The audio output interface 390 may include at least one of a speaker, a headphone output terminal, or a Sony/Phillips Digital Interface (S/PDIF) output terminal.

The power supply 395 supplies, according to control by the processor 110, power input from an external power source to internal components of the electronic device 100. The power supply 395 may also supply, according to control by the processor 110, power output from one or more batteries (not shown) located within the electronic device 100 to the internal components.

The memory 120 may store various pieces of data, programs, or applications for driving and controlling the electronic device 100 according to control by the processor 110. Although not shown, the memory 120 may include a broadcasting receiving module, a channel control module, a volume control module, a communication control module, a speech recognition module, a motion recognition module, a light receiving module, a display control module, an audio control module, an external input control module, a power control module, a power control module for an external device connected wirelessly (e.g., via Bluetooth), a speech database (DB), or a motion DB. The modules and DBs of the memory 120 not shown in FIG. 18 may be implemented in the form of software in order to perform a broadcast reception control function, a channel control function, a volume control function, a communication control function, a speech recognition function, a motion recognition function, a light receiving control function, a display control function, an audio control function, an external input control function, a power control function, or a power control function for the external device connected wirelessly (e.g., via Bluetooth). The processor 110 may perform the respective functions by using the software stored in the memory 120.

In FIG. 18, the processor 110 is shown as a single element, but is not limited thereto. In an embodiment of the disclosure, the processor 110 may be configured as a single processor or a plurality of processors.

In an embodiment of the disclosure, the processor 110 may be configured as a dedicated hardware chip that performs AI training.

A 'module' included in the memory 120 refers to a unit for processing functions or operations performed by the processor 110, and may be implemented as software such as instructions, algorithms, data structures, or program code.

Moreover, the block diagram of the electronic device 100 illustrated in FIGS. 17 and 18 is a block diagram for an embodiment of the disclosure. The components in the block diagram may be integrated, added, or omitted according to specifications of the electronic device 100 that is actually implemented. In other words, two or more components may be combined into a single component, or a single component may be subdivided into two or more components when necessary. Furthermore, functions performed by each block are intended to describe embodiments of the disclosure, and a specific operation or device related to the functions does not limit the scope of the disclosure.

According to an embodiment of the disclosure, an operation method of the electronic device 100 may be implemented in the form of recording media including instructions executable by a computer, such as a program module executed by the computer. The computer-readable recording media may be any available media that are accessible by the computer, and include both volatile and non-volatile media and both removable and non-removable media. The computer-readable recording media may include program commands, data files, data structures, etc. either alone or in combination. The program commands recorded on the computer-readable recording media may be designed and configured specially for the disclosure or may be known to and be usable by those of ordinary skill in the art of computer software. Examples of the computer-readable recording media include magnetic media such as hard disks, floppy disks, and magnetic tapes, optical media such as compact disk ROM (CD-ROM) and digital versatile disks (DVDs), magneto-optical media such as floptical disks, and hardware devices that are specially configured to store and perform program commands, such as ROM, RAM, flash memory, etc. Examples of program commands include not only machine code such as that generated by a compiler but also high-level language code that may be executed by a computer using an interpreter or the like.

According to an embodiment of the disclosure, methods according to various embodiments of the disclosure presented herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description is provided for illustration, and it will be understood by one of ordinary skill in the art that changes in form and details may be readily made therein without departing from technical idea or essential features of the disclosure. Accordingly, the above-described embodiments of the disclosure and all aspects thereof are merely examples and are not limiting. For example, each component defined as an integrated component may be implemented in a distributed fashion, and likewise, components defined as separate components may be implemented in an integrated form.

According to an embodiment of the disclosure, an electronic device includes at least one processor including processing circuitry and memory storing one or more instructions, when executed by the at least one processor individually or collectively, causes the electronic device to receive a user input corresponding to playback of content, obtain, based on a knowledge graph for the content and a knowledge graph for at least one advertisement, an advertisement to be output during the playback of the content and an output time for the advertisement, and output the advertisement at the output time for the advertisement. By obtaining the advertisement and its output time based on a comparison of the knowledge graphs, the electronic device (or method) can strategically match an advertisement to the content and display it at an appropriate time. This solves the conventional problem of randomly displayed advertisements that cause user fatigue and reduce the effectiveness of advertising.

The one or more instructions, when executed by the at least one processor individually or collectively, may cause the electronic device to receive a request for playback of content from a user, obtain, based on a knowledge graph for the content and a knowledge graph for at least one advertisement, an advertisement to be output during the playback of the content and an output time for the advertisement, and play the advertisement at the output time for the advertisement.

The knowledge graph for the content may be obtained by inputting the content and metadata about the content to a multimodal LLM, and the knowledge graph for the at least one advertisement may be obtained by inputting the at least one advertisement and respective metadata about the at least one advertisement to a multimodal LLM. The use of a multimodal LLM (multimodal large language model) provides the technical effect of allowing the system to understand and process data from multiple modalities simultaneously, such as images, audio, and video, in addition to text. Furthermore, by inputting the metadata along with the content (or advertisement), the technical effect achieved is an improvement in the performance of the analysis results for generating the respective knowledge graphs.

The knowledge graph for the content may include at least one of a title, a genre, a plot, a cast, characters, a historical background, a location, section division information, summary information by section, mood information by section, location information by section, time information by section, or information about PPL advertisement. This structured information provides a machine-understandable form of the content's semantic connections. Specifically, the inclusion of section division information, along with summary and mood information by section, provides the technical effect of allowing the electronic device to analyze the content in detailed units, rather than just as a whole. This enables a more granular matching of advertisements to the specific context (e.g., mood, plot) of a particular segment of the content.

The knowledge graph for the advertisement may include at least one of an advertisement object, a cast, characters, a location, a historical background, an advertisement target, an advertisement plot, an advertisement mood, or advertisement category information. By structuring the advertisement's attributes, such as its advertisement mood, advertisement target, and advertisement plot, into a knowledge graph, the electronic device is provided with machine-understandable information. This enables a precise comparison between the ad's specific attributes and the content's attributes (as defined in the content knowledge graph) to determine a high-relevance match.

The one or more instructions, when executed by the at least one processor individually or collectively, may cause the electronic device to obtain, based on the knowledge graph for the content and the knowledge graph for the at least one advertisement, a list of advertisements selected by rank and an output time for each advertisement included in the list of advertisements, and obtain, from among the advertisements included in the list of advertisements, an advertisement with a highest rank that belongs to a recommended advertisement category obtained based on context information of the electronic device together with an output time for the advertisement. This feature provides a technical refinement to the matching process. Instead of only considering content relevance, the electronic device (or method) filters the list to also account for the user's current viewing environment. This has the technical effect of selecting an advertisement that is not only relevant but also suitable for the device's context information, such as the time of day or the ambient noise level.

The one or more instructions, when executed by the at least one processor individually or collectively, may cause the electronic device to obtain, based on the knowledge graph for the content and the knowledge graph for the at least one advertisement, an advertisement list selected by rank and an output time for each advertisement included in the advertisement list, obtain a second advertisement list by filtering the advertisement list according to a recommended advertisement category obtained based on context information of the electronic device, together with an output time for each advertisement included in the second advertisement list, and obtain, from the second advertisement list, an advertisement selected based on advertisement response history information obtained for the user, together with an output time for the advertisement. This provides a further layer of personalization to the advertisement selection. By using the advertisement response history information, the electronic device (or method) can obtain user preference information and filter out advertisement categories that the user has a high probability of skipping (e.g., a high "bounce rate") at that particular time or for that category. The technical effect is an improved selection of an 'optimal' advertisement that is matched not only to the content and environment, but also to the user's past behavior, further maximizing its effectiveness.

The context information may include at least one of information about a time at which the content playback request is received, information about illuminance around the electronic device, information about noise around the electronic device, or information about a mood around the electronic device. This specific information allows the electronic device to model the user's viewing environment. For example, the illuminance and noise information can be used to determine if the user is in a 'dim' or 'quiet' state. This state information has the technical effect of enabling the selection of an advertisement that is suitable for that specific environment (e.g., an ad that is optimal for a quiet environment).

The advertisement response history information obtained for the user may include at least one of the user's bounce rate by advertisement category, an average viewing time by advertisement category, or an advertisement bounce rate by time interval. These specific metrics provide concrete data for obtaining user preference information. The 'user's bounce rate by advertisement category' and 'advertisement bounce rate by time interval' allow the electronic device to quantify the probability of a user leaving before completing an advertisement. This quantitative risk is then used as a technical filter to delete advertisement categories with a bounce rate higher than a defined rate, thereby selecting an ad that the user is more likely to watch to completion.

The one or more instructions, when executed by the at least one processor individually or collectively, may cause the electronic device to obtain an advertisement to be output by section of the content and an output time for the advertisement. This feature provides a more granular matching capability. Instead of matching an advertisement to the overall content, the electronic device can compare the advertisement knowledge graph to the information for each section of the content knowledge graph. The technical effect is an improved relevance match, as the advertisement can be selected based on the specific mood, summary, or characters of the section it will be inserted into, accounting for changes in the content over time.

The one or more instructions, when executed by the at least one processor individually or collectively, may cause the electronic device to obtain, from a server, the advertisement to be output and the output time for the advertisement. This feature describes a server-based implementation (as shown in FIG. 14) which provides a key architectural effect: the computationally intensive processing is offloaded from the electronic device to the server. The server performs the generation and storage of the knowledge graphs and the optimal advertisement matching operation, reducing the processing and storage burden on the electronic device (e.g., a TV). The electronic device simply transmits its local context and user history information in the request and receives the final advertisement selection and output time.

According to an embodiment of the disclosure, an operation method of the electronic device may include receiving a request for playback of content from a user, obtaining, based on a knowledge graph for the content and a knowledge graph for at least one advertisement, an advertisement to be output during the playback of the content and an output time for the advertisement, and playing the advertisement at the output time for the advertisement.

The knowledge graph for the content may be obtained by inputting the content and metadata about the content to a multimodal LLM, and the knowledge graph for the at least one advertisement may be obtained by inputting the at least one advertisement and metadata about each of the at least one advertisement to a multimodal LLM.

The knowledge graph for the content may include at least one of a title, a genre, a plot, a cast, characters, a historical background, a location, section division information, summary information by section, mood information by section, location information by section, time information by section, or information about PPL advertisement.

The knowledge graph for each of the at least one advertisement may include at least one of an advertisement object, a cast, characters, a location, a historical background, an advertisement target, an advertisement plot, an advertisement mood, or advertisement category information.

The obtaining of the advertisement to be output during the playback of the content and the output time for the advertisement may include obtaining, based on the knowledge graph for the content and the knowledge graph for the at least one advertisement, a list of advertisements selected by rank and an output time for each advertisement included in the list of advertisements, and obtaining, from among the advertisements included in the list of advertisements, an advertisement with a highest rank that belongs to a recommended advertisement category obtained based on context information of the electronic device, together with an output time for the advertisement.

The obtaining of the advertisement to be output during the playback of the content and the output time for the advertisement may include obtaining, based on the knowledge graph for the content and the knowledge graph for the at least one advertisement, an advertisement list selected by rank and an output time for each advertisement included in the advertisement list, obtaining a second advertisement list by filtering the advertisement list according to a recommended advertisement category obtained based on context information of the electronic device, together with an output time for each advertisement included in the second advertisement list, and obtaining, from the second advertisement list, an advertisement selected based on advertisement response history information obtained for the user, together with an output time for the advertisement.

The context information may include at least one of information about a time at which the content playback request is received, information about illuminance around the electronic device, information about noise around the electronic device, or information about a mood around the electronic device.

The advertisement response history information obtained for the user may include at least one of the user's bounce rate by advertisement category, an average viewing time by advertisement category, or an advertisement bounce rate by time interval.

The obtaining of the advertisement to be output during the playback of the content and the output time for the advertisement may include obtaining an advertisement to be output by section of the content and an output time for the advertisement.
There is provided a computer-readable recording medium having recorded thereon a program for performing the operation method of the electronic device.

## Claims

1. An electronic device comprising:
at least one processor (110) including processing circuitry; and
memory (120) storing one or more instructions,
wherein the one or more instructions, when executed by the at least one processor (110) individually or collectively, cause the electronic device (100) to
receive (S810) a user input corresponding to playback of content (201),
obtain (S820), based on a knowledge graph for the content and a knowledge graph for at least one advertisement (501), an advertisement to be output during the playback of the content and an output time for the advertisement, and
output (S830) the advertisement at the output time for the advertisement.

2. The electronic device of claim 1, wherein
the knowledge graph for the content is obtained through an artificial intelligence, AI, model based on the content and metadata about the content, and
the knowledge graph for the at least one advertisement is obtained through an AI model based on the at least one advertisement and respective metadata about the at least one advertisement.

3. The electronic device of claim 1 or 2, wherein the knowledge graph for the content comprises at least one of a title, a genre, a plot, a cast, characters, a historical background, a location, section division information, summary information by section, mood information by section, location information by section, time information by section, or information about product placement, PPL, advertisement.

4. The electronic device of any one of claims 1 to 3, wherein the knowledge graph for the at least one advertisement comprises at least one of an advertisement object, a cast, characters, a location, a historical background, an advertisement target, an advertisement plot, an advertisement mood, or advertisement category information.

5. The electronic device of any one of claims 1 to 4, wherein the one or more instructions, when executed by the at least one processor individually or collectively, cause the electronic device to
obtain, based on the knowledge graph for the content and the knowledge graph for the at least one advertisement, a list of advertisements selected by rank and an output time for each advertisement included in the list of advertisements, and
obtain, from among the advertisements included in the list of advertisements, an advertisement with a highest rank that belongs to a recommended advertisement category obtained based on context information of the electronic device, together with an output time for the advertisement.

6. The electronic device of any one of claims 1 to 5, wherein the one or more instructions, when executed by the at least one processor individually or collectively, cause the electronic device to
obtain, based on the knowledge graph for the content and the knowledge graph for the at least one advertisement, an advertisement list selected by rank and an output time for each advertisement included in the advertisement list,
obtain a second advertisement list by filtering the advertisement list according to a recommended advertisement category obtained based on context information of the electronic device together with an output time for each advertisement included in the second advertisement list, and
obtain, from the second advertisement list, an advertisement that is selected based on advertisement response history information obtained for the user, and an output time for the advertisement.

7. The electronic device of claim 5 or 6, wherein the context information comprises at least one of information about a time at which the content playback request is received, information about illuminance around the electronic device, information about noise around the electronic device, or information about a mood around the electronic device.

8. The electronic device of claim 6 or 7, wherein the advertisement response history information corresponding to the user comprises at least one of the user's bounce rate by advertisement category, an average viewing time by advertisement category, or an advertisement bounce rate by time interval.

9. The electronic device of any one of claims 1 to 8, wherein the one or more instructions, when executed by the at least one processor individually or collectively, cause the electronic device to obtain an advertisement to be output by section of the content and an output time for the advertisement.

10. The electronic device of claim 1, wherein the one or more instructions, when executed by the at least one processor individually or collectively, cause the electronic device to
transmit a request for advertisement matching to a server, and
obtain, from the server, the advertisement to be output and the output time for the advertisement corresponding to the request.

11. An operation method of an electronic device, the operation method comprising:
receiving (S810) a user input corresponding to playback of content;
obtaining (S820), based on a knowledge graph for the content and a knowledge graph for at least one advertisement, an advertisement to be output during the playback of the content and an output time for the advertisement; and
outputting (S830) the advertisement at the output time for the advertisement.

12. The operation method of claim 11, wherein
the knowledge graph for the content is obtained through an artificial intelligence, AI, model based on the content and metadata about the content, and
the knowledge graph for the at least one advertisement is obtained through an AI model based on the at least one advertisement and respective metadata about the at least one advertisement.

13. The operation method of claim 11 or 12, wherein the obtaining of the advertisement to be output during the playback of the content and the output time for the advertisement comprises:
obtaining, based on the knowledge graph for the content and the knowledge graph for the at least one advertisement, a list of advertisements selected by rank and an output time for each advertisement included in the list of advertisements; and
obtaining, from among the advertisements included in the list of advertisements, an advertisement with a highest rank that belongs to a recommended advertisement category obtained based on context information of the electronic device, together with an output time for the advertisement.

14. The operation method of any one of claims 11 to 13, wherein the obtaining of the advertisement to be output during the playback of the content and the output time for the advertisement comprises:
obtaining, based on the knowledge graph for the content and the knowledge graph for the at least one advertisement, an advertisement list selected by rank and an output time for each advertisement included in the advertisement list;
obtaining a second advertisement list by filtering the advertisement list according to a recommended advertisement category obtained based on context information of the electronic device, together with an output time for each advertisement included in the second advertisement list; and
obtaining, from the second advertisement list, an advertisement selected based on advertisement response history information obtained for the user together with an output time for the advertisement.

15. A computer-readable recording medium having recorded thereon a program for performing the operation method of any one of claims 11 to 14 on a computer.
